Europäisches Patentamt

European Patent Office

Office européen des brevets

(19)

(11) EP 0 723 728 B1

(12) EUROPÄISCHE PATENTSCHRIFT

(45) Veröffentlichungstag und Bekanntmachung des Hinweises auf die Patenterteilung:
**17.02.1999 Patentblatt 1999/07**

(21) Anmeldenummer: **94928294.1**

(22) Anmeldetag: **07.10.1994**

(51) Int Cl.6: **H04N 1/60**

(86) Internationale Anmeldenummer:
**PCT/DE94/01182**

(87) Internationale Veröffentlichungsnummer:
**WO 95/10914 (20.04.1995 Gazette 1995/17)**

(54) **VERFAHREN UND EINRICHTUNG ZUR UMSETZUNG VON FARBWERTEN**

COLOUR VALUE CONVERSION PROCESS AND DEVICE

PROCEDE ET DISPOSITIF DE CONVERSION DE VALEURS DE COULEURS

(84) Benannte Vertragsstaaten:
**DE FR GB**

(30) Priorität: **15.10.1993 DE 4335143**

(43) Veröffentlichungstag der Anmeldung:
**31.07.1996 Patentblatt 1996/31**

(73) Patentinhaber: **Heidelberger Druckmaschinen Aktiengesellschaft**
**69115 Heidelberg (DE)**

(72) Erfinder: **BESTMANN, Günter**
**D-24161 Altenholz (DE)**

(56) Entgegenhaltungen:
**EP-A- 0 144 188          WO-A-94/08274**
**DE-A- 4 305 693          US-A- 4 959 669**

**Beschreibung**

Die Erfindung bezieht sich auf das Gebiet der elektronischen Reproduktionstechnik und betrifft ein Verfahren und eine Einrichtung zur Umsetzung von Farbwerten zwecks Anpassung an einen Druckprozeß bei Geräten und Systemen für die Bildverarbeitung.

Die Reproduktionstechnik befaßt sich mit Verfahren zur Wiedergabe von Bildvorlagen im Druck, bei denen von einer Vorlage eine Kopiervorlage als Basis für eine Druckform angefertigt wird. In einer Druckmaschine erfolgt mittels der Druckform die Reproduktion der Vorlage.

Die Herstellung einer Kopiervorlage erfolgt im allgemeinen in den Schritten Bildeingabe, Bildbearbeitung und Bildausgabe.

Bei der Bildeingabe z.B. mittels eines Farbbildabtasters (Scanner) als Eingabegerät werden durch trichromatische sowie bildpunkt- und zeilenweise optoelektronische Abtastung einer zu reproduzierenden Farbvorlage drei primäre Farbwertsignale R, G und B gewonnen, wobei die einzelnen Farbwerttripel die Farbanteile "Rot" (R), "Grün" (G) und "Blau" (B) der in der Farbvorlage abgetasteten Bildpunkte repräsentieren. Die analogen Farbwertsignale werden in digitale Farbwerte umgewandelt und für die anschließende Bildbearbeitung gespeichert.

Bei der Bildbearbeitung werden die Farbwerte R, G und B zunächst durch eine Basis-Farbkorrektur nach den Gesetzmäßigkeiten der subtraktiven Farbmischung in Farbauszugswerte C, M, Y und K umgesetzt, welche ein Maß für die Dosierung bzw. für die Rasterpunktgrößen der im späteren Druckprozeß verwendeten Druckfarben "Cyan" (C), "Magenta" (M), "Gelb" (Y) und "Schwarz" (K) sind. Darüberhinaus werden bei der Bildbearbeitung weitere Farkorrekturen durchgeführt mit dem Ziel, die Bildwiedergabe zu verbessern, Mängel auszugleichen oder redaktionelle Änderungen vorzunehmen.

Nach der Bildbearbeitung erfolgt die Bildausgabe mittels eines geeigneten Ausgabegerätes, beispielsweise mittels eines Farbauszugs-Belichters (Recorder) für die gerasterte Aufzeichnung der Farbauszüge "Cyan", "Magenta", "Gelb" und "Schwarz" auf einen Film.

Vielfach wird die Forderung erhoben, verschiedene Eingabe- und Ausgabegeräte an ein Farbbild-Bearbeitungssystem anzuschließen zu können. Dazu ist die Einführung eines definierten Standards für die Farbwerte an der Schnittstelle zwischen Bildeingabe und Farbbild-Bearbeitung und an der Schnittstelle zwischen Farbbild-Bearbeitung und Bildausgabe von großem Vorteil. Dazu müssen die im Eingabegerät erzeugten Farbwerte R, G und B auf den jeweiligen internen Standard des Farbbild-Bearbeitungssystems, beispielsweise in die Farbwerte L*, a* und b* des CIELAB-Farbraumes transformiert, bearbeitet und die standardisierten und korrigierten Farbwerte L*, a* und b* dann in Form einer Umsetzungs-Tabelle, nachfolgend Druck-Tabelle genannt, in die Farbauszugswerte C, M, Y und K für die Belichtung der Farbauszüge umgewandelt werden.

Aus der Literatur, beispielsweise aus der Zeitschrift "Der Druckspiegel", No. 6, 1991, Seiten 580 bis 592, Artikel "Farbe in der Bildverarbeitung" ist es schon bekannt, die in einem Farbbildabtaster gewonnenen Farbwerte eines geräteabhängigen Eingabe-Farbraumes für eine universielle Farbdarstellung durch eine Farbraumtransformation in Farbwerte eines geräteunabhängigen KommunikationsFarbraumes zu transformieren, die entsprechenden Korrekturen anhand der transformierten Farbwerte vorzunehmen und dann die korrigierten Farbwerte durch eine weitere Farbtransformation in die entsprechenden Prozeßfarbwerte eines geräteabhängigen Ausgabe-Farbraumes umzuwandeln.

Aus der EP-A-0 528 094 ist bereits ein Verfahren zur Ermittlung einer Druck-Tabelle bekannt. Es erfolgt dort ein Ausmessen der betreffenden Farbwerte sowie eine anschließende Interpolation zur Ermittlung von Zwischenwerten. Aufgrund des verursachten Aufwandes werden relativ wenige Stützwerte ermittelt und zwischen diesen Stützwerten wird interpoliert. Aufgrund der geringen Anzahl der Stützwerte kann nur eine eingeschränkte Genauigkeit erreicht werden.

Eine weitere Möglichkeit zur Berechnung einer Druck-Tabelle für Bildreproduktionsgeräte ist in der DE-A-40 12 905 beschrieben.

DE-A-4 305 693 beschreibt ein Verfahren, bei dem eine Kalibrierung der Schnittstelle zwischen Farbbild-Abtastung und Farbbild-Bearbeitung durchgeführt wird.

Die für den Druckprozeß notwendige Ermittlung einer Druck-Tabelle durch Umwandlung der Farbwerte R, G und B in die Farbauszugswerte C, M, Y und K werden bisher in der Praxis experimentell durch visuellen Vergleich zwischen Farbvorlage und dem Druckergebnis ermittelt. Eine Anpassung der Druck-Tabellen an andere Druckprozesse ist oft schwierig und zeitaufwendig. Weitere Nachteile dieser Vorgehensweise sind die Druckfarben- und die Druckprozeßabhängigkeit, die unanschauliche Darstellung der Farbwerte durch Flächendeckungswerte (Rasterprozentwerte), die Notwendigkeit hochqualifizierten Bedienungspersonals und die Schwierigkeit, sich über Farben zu verständigen.

Der Erfindung liegt daher die Aufgabe zugrunde, ein Verfahren und eine Einrichtung zur Umwandlung von Farbwerten zwecks Anpassung an einen Druckprozeß anzugeben, mit denen sich Druck-Tabellen mit großer Genauigkeit zur Erzielung einer hohen Reproduktionsqualität erstellen lassen.

Diese Aufgabe wird bezüglich des Verfahrens durch die Merkmale des Patentanspruchs 1 und bezüglich der Einrichtung durch die Merkmale des Patentanspruchs 19 gelöst.

Vorteilhafte Weiterbildungen sind in den Unteransprüchen angegeben.

Die Erfindung wird im folgenden anhand der Figuren 1 bis 5 näher erläutert.

Es zeigen:

Fig. 1    den schematischen Aufbau eines Bildverarbeitungs-Systems in einem Blockschaltbild,

Fig. 2    einen Ablauf-Diagramm zur Berechnung einer Druck-Tabelle,

Fig. 3    einen Ablauf-Diagramm zur Farbwert-Kalibrierung,

Fig. 4    ein Blockschaltbild einer Einrichtung zur Ermittlung von Korrekturwerten für die Farbwert-Kalibrierung **und**

Fig. 5    den schematischen Aufbau eines Farbumsetzers in einem Blockschaltbild.

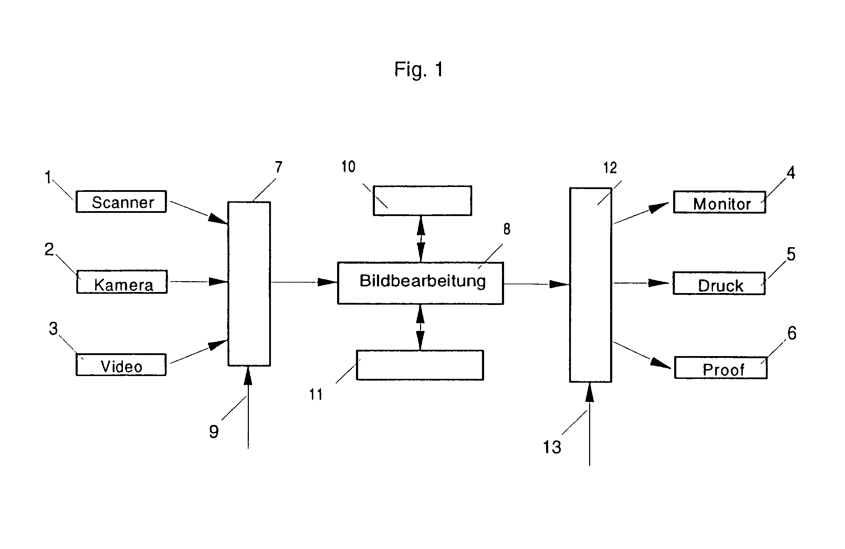

Fig. 1 zeigt den schematischen Aufbau und den Signalfluß eines Farbbildverarbeitungs-Systems in einem Blockschaltbild. Punkt- und zeilenweise abtastende Eingabegeräte sind durch einen Scanner (1) repräsentiert, flächenweise abtastende Geräte durch eine Kamera (2) und Geräte zur Erzeugung farbiger graphischer Daten wie z.B. Grafik-Design-Stationen durch eine Grafik-Eingabe (3). Die möglichen Ausgabegeräte sind durch einen Farbmonitor (4), einen Farbauszugs-Recorder oder Belichter (5) sowie einen Proof-Recorder (6) angedeutet. Die in den Eingabegeräten (1,2,3) erzeugten Farbwerte des jeweiligen geräteabhängen Eingabe-Farbraumes, beispielsweise die Farbwerte R, G und B des RGB-Farbraumes, werden in einem dreidimensionalen Eingabe-Farbumsetzer (7) durch eine Eingabe- Farbtransformation in Farbwerte eines geräteunabhängigen Kommunikations-Farbraumes, beispielsweise in die Farbwerte L*, a* und b* des CIELAB-Farbraumes der CIE von 1976, umgesetzt und einer Bildbearbeitungs-Einheit (8) zugeführt.

Der dreidimensionale Eingabe-Farbumsetzer (7) ist als Tabellen-Speicher (LUT) für eine eingabeseitige Umsetzungs-Tabelle ausgebildet, in dem die Farbwerte L*, a* und b* durch die funktionsmäßig zugehörigen Farbwerte R, G und B adressierbar gespeichert sind.

In der Bildbearbeitungs-Einheit (8) werden die vom Anwender gewünschten Farbkorrekturen und geometrischen Bearbeitungen anhand der transformierten Farbwerte L*, a* und b* des Kommunikations-Farbraumes durchgeführt. Dazu ist die Bildbearbeitungs-Einheit (8) mit einem Bedienungsterminal (10) verbunden, mit dem der Anwender die gewünschten Farbkorrekturen durchführt. Außerdem steht die Bildbearbeitungs-Einheit (8) mit einer Kommunikations-Einheit (11) in Verbindung, in der die zu bearbeitenden Farbwerte zwischengespeichert sind.

Nach der Bildbearbeitung werden die korrigierten Farbwerte L*, a* und b* aus der Bildbearbeitungs-Einheit (8) ausgelesen und in einem ebenfallls dreidimensionalen Ausgabe-Farbumsetzer (12) durch eine Ausgabe-Farbtransformation in die Prozeß-Farbwerte eines gerätespezifischen Ausgabe-Farbraumes umgesetzt, die dem jeweiligen Ausgabegerät (4,5,6) zugeführt werden.

Der dreidimensionale Ausgabe-Farbumsetzer (12) ist ebenfalls als Tabellen-Speicher (LUT) für eine ausgabeseitige Farbumsetzungs-Tabelle ausgebildet, in dem die Prozeß-Farbwerte durch die funktionsmäßig zugehörigen Farbwerte L*, a* und b* adressierbar gespeichert sind.

Die Farbumsetzungs-Tabellen werden vor der Bildbearbeitung berechnet und entsprechend über einen Eingang (9) in den Eingabe-Farbumsetzer (7) bzw. über einen Eingang (13) in den Ausgabe-Farbumsetzer (12) geladen.

Die Farbumsetzungs-Tabellen können jeweils für alle theoretisch möglichen Farbwerte des Farbraumes oder aber in vorteilhafter Weise zunächst nur für ein Stützpunkt-Gerüst von grob gestuften Farbwerten berechnet werden, wobei alle für die Farbtransformationen tatsächlich benötigten Farbwerte durch eine dreidimensionale Interpolations-Rechnung anhand des Stützpunkt-Gerüstes ermittelt werden. In diesem Fall weisen die Farbumsetzer zusätzlich Interpolations-Stufen auf.

Die Farbumsetzer (7,12) sind, wie in Fig.1 dargestellt, separate Einheiten oder Bestandteil eines Eingabegerätes (1,2,3) bzw. eines Ausgabegerätes (4,5,6) oder aber Bestandteile der Bildbearbeitungs-Einheit (8).

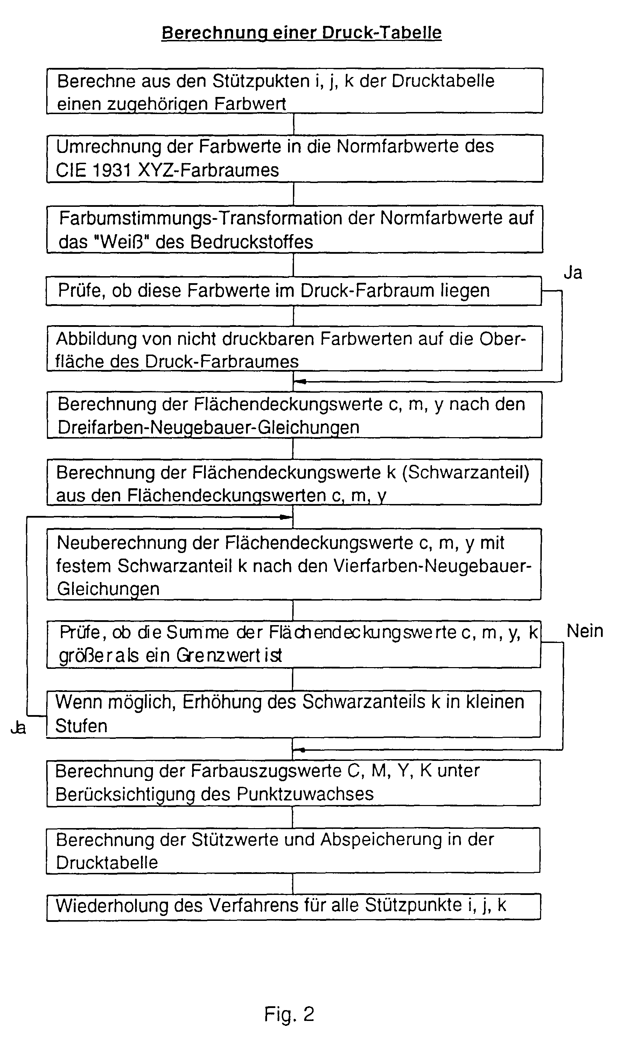

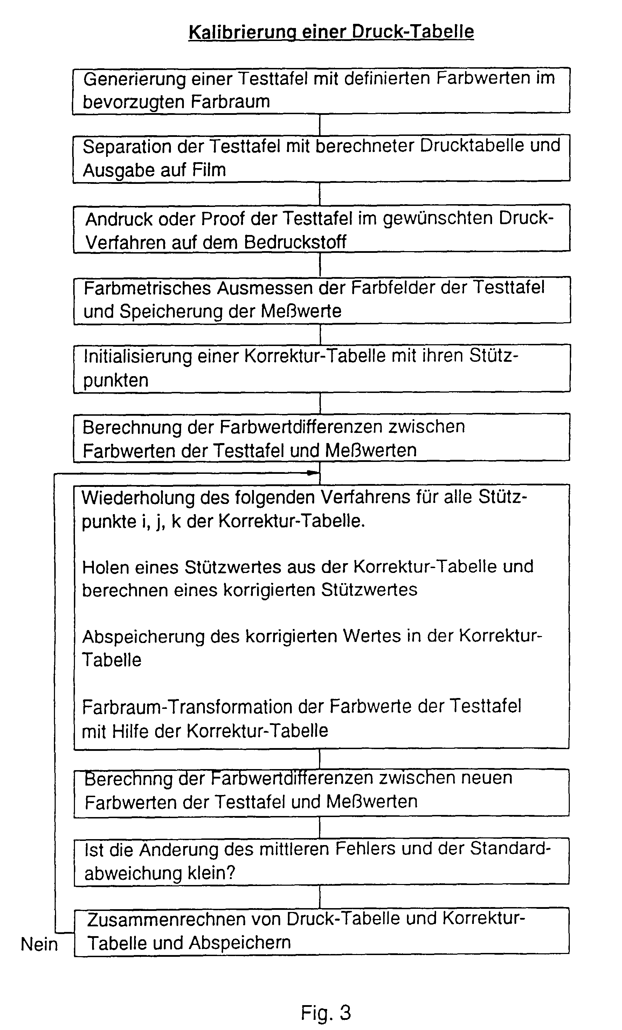

Das Verfahren zur Ermittlung einer ausgabeseitigen Farbumsetzungs-Tabelle (Druck-Tabelle) für die Ausgabe-Farbumsetzung der in einer Bildbearbeitungs-Einheit korrigierten Farbwerte eines standardisierten Kommunikations-Farbraumes in die Farbauszugswerte C, M, Y und K eines spezifischen Druck-Farbraumes, ist Gegenstand der vorliegenden Patentanmeldung und wird nachfolgend anhand der in den Fig. 2 und 3 dargestellten Ablauf-Diagrammen näher erläutert. In diesem Fall ist in dem Tabellen-Speicher (LUT) des Ausgabe-Farbumsetzers (12) eine Druck-Tabelle der Form:

$$C,M,Y,K = f(L^*,a^*,b^*)$$

geladen.

In dem beschriebenen Beispiel werden die Farbwerte L*, a* und b* des CIELAB-Farbraumes der CIE von 1976 als standardisierter Kommunikations-Farbraum in die Farbauszugswerte C, M, Y und K umgesetzt. Als standardisierter Kommunikations-Farbraum kann aber auch der CIELUV-, der YCC- oder ein anderer Normfarbraum verwendet werden.

Bei dem erfindungsgemäßen Verfahren werden zunächst die Farbauszugswerte C, M, Y und K für die Belichtung der Farbauszüge in Abhängigkeit von den Farbwerten L*, a* und b* des standardisierten Kommunikations-Farbraumes als Druck-Tabelle C,M,Y,K = f(L*,a*,b*) näherungsweise aus den Druckfarben (Eckfarben und Zwischenfarben des Druck-Farbraumes) und den Druckprozeßwerten wie dem Punktzuwachs, analytisch berechnet. Anschließend erfolgt durch eine Farbwert-Kalibrierung die exakte Anpassung der näherungsweise berechneten Farbauszugswerte C, M, Y und K der Druck-Tabelle an den Druckprozeß, indem Korrekturwerte ermittelt und die Farbauszugswerte C, M, Y und K entsprechend korrigiert werden.

## Näherungsweise Berechnung der Farbauszugswerte C, M, Y und K der Druck-Tabelle.

Voraussetzung für die näherungsweise analytische Berechnung der Farbauszugswerte C, M, Y und K ist die Kenntnis einiger Parameter, nämlich der Normfarbwerte X, Y und Z der vier Druckfarben Cyan, Magenta, Gelb und Schwarz und deren Zusammendrucke, die Normfarbwerte $X_p$, $Y_p$ und $Z_p$ des Bedruckstoffes für den späteren Druckprozeß, der funktionale Zusammenhang für die Berechnung der Farbauszugswerte K für" Schwarz" sowie die Druckgradation (Punktzuwachs) erforderlich. Als weiterer Parameter kann die Flächendeckungssumme der vier Druckfarben mit berücksichtigt werden.

Die Berechnung der Farbauszugswerte C, M,Y und K kann für alle theoretisch möglichen Farbwerte L*, a* und b* des CIELAB-Farbraumes oder aber in vorteilhafter Weise, wie im nachfolgenden Beispiel beschrieben, zunächst nur für ein Stützpunkt-Gerüst von grob gestuften Farbwerten erfolgen, wobei alle für die spätere Farbtransformation tatsächlich benötigten Farbwerte durch eine dreidimensionale Interpolations-Rechnung anhand des Stützpunkt-Gerüstes ermittelt werden. In diesem Fall weist der Ausgabe-Farbumsetzer (12) zusätzlich eine Interpolations-Stufe auf.

Die Berechnung der Farbauszugswerte C, M, Y und K für jeden Farbort bzw. Stützpunkt (i,j,k) des CIELAB-Farbraumes erfolgt entsprechend dem Ablauf-Diagramm nach Fig. 2 in folgenden Verfahrenschritten [A] bis [F]:

In einem Verfahrenschritt [A] werden die Farbwerte L*, a* und b* des CIELAB-Farbraumes zunächst in die Normfarbwerte X, Y und Z des CIE 1931 XYZ-Farbraumes nach der Gleichung:

$$X,Y,Z = f(L^*,a^*,b^*)$$

transformiert.

Diese Transformation läuft im einzelnen nach folgenden Gleichungen ab:

$$f(X/X_n) = a^*/500 + f(Y/Y_n)$$

$$f(Y/Y_n) = (L^* + 16)/116$$

$$f(Z/Z_n) = f(Y/Y_n) - b^*/200$$

Daraus ergibt sich:

$$
\begin{aligned}
X/X_n &= [f(X/X_n)]^3 & X/X_n \geq (0.008856)^3 \\
      &= [f(X/X_n) - 16/116]/7.787 & X/X_n < (0.008856)^3 \\
Y/Y_n &= [f(Y/Y_n)]^3 & Y/Y_n \geq (0.008856)^3 \\
      &= [f(Y/Y_n) - 16/116]/7.787 & Y/Y_n < (0.008856)^3 \\
Z/Z_n &= [f(Z/Z_n)]^3 & Z/Z_n \geq (0.008856)^3 \\
      &\quad - [f(Z/Z_n) - 16/116]/7.787 & Z/Z_n < (0.008856)^3
\end{aligned}
$$

In den Gleichungen sind $X_n$, $Y_n$ und $Z_n$ die Normfarbwerte für eine bestimmte Lichtart, z.B. für die Lichtart D65.

In einem folgenden Verfahrenschritt [B] werden die im Verfahrensschritt [A] bestimmten Normfarbwerte X, Y und Z auf das "Weiß" des beim späteren Druckprozeß verwendeten Bedruckstoffes mittels einer Farbumstimmungs-Transformation, beispielsweise mittels der "von Kries"-Transformation, in farbumgestimmte Normfarbwerte X', Y' und Z' nach der Gleichung:

$$X',Y',Z' = f(X,Y,Z)$$

umgerechnet.

Die "von Kries"-Transformation ist z.B. bei R.W.G. Hunt, Measuring Color, Ellis Horwood Limited, Chichester, England (1989), beschrieben.

Die Farbumstimmungs-Transformation nach "von Kries" beschreibt eine Änderung von einer gegebenen Lichtart, die durch die Normfarbwerte X, Y und Z definiert ist, in die Lichtart E des energiegleichen Spektrums. Durch Invertierung der Transformations-Matrix läßt sich eine Farbumstimmung von der Lichtart E in eine andere Lichtart berechnen. Kombinationen der Transformationen führen dann zu beliebigen Farbumstimmungen. Für die Farbumstimmungs-Transformation müssen die Normfarbwerte vom Bezugsweiß des CIELAB-Farbraumes und vom "Weiß" des Bedruckstoffes bekannt sein.

Die Farbumstimmungs-Transformation, beispielsweise in die Lichtart E, läuft nach folgenden Gleichungen ab:

Berechnung der Farbart-Koeffizienten des Referenz-Weiß

$$x = X/(X + Y + Z)$$

$$y = Y/(X + Y + Z)$$

Berechnung der Matrizierungs-Koeffizienten

$$b_{11} = y/(0.101 - 0.561 * x + 1.258 * y)$$

$$b_{33} = y/(1.0 - x - y)$$

$$b_{12} = 2.9543 * (1.0 - b_{11})$$

$$b_{13} = 0.2196 * (b_{33} - b_{11})$$

Farbumstimmungs-Transformation

$$\begin{bmatrix} X \\ Y \\ Z \end{bmatrix}_E = \begin{bmatrix} b_{11} & b_{12} & b_{13} \\ 0.0 & 1.0 & 0.0 \\ 0.0 & 0.0 & b_{33} \end{bmatrix} * \begin{bmatrix} X \\ Y \\ Z \end{bmatrix}_L$$

Nach der Farbumstimmungs-Transformation wird in zweckmäßiger Weise überprüft, ob die farbumgestimmten Normfarbwerte X', Y' und Z' im Druck-Farbraum liegen, wozu die Normfarbwerte der Druckfarben und ihrer Übereinanderdrucke bekannt sein müssen. Ergibt die Überprüfung, daß die farbumgestimmten Normfarbwerte X',Y' und Z' im Druck-Farbraum liegen, wird zu Verfahrensschritt [C] übergegangen, anderenfalls erfolgt eine Abbildung von nicht druckbaren Farbwerten auf die Oberfläche des Druck-Farbraumes unter Erhalt des jeweiligen Bunttones sowie unter gleichmäßiger Komprimierung von Helligkeit und Buntheit.

In einem weiteren Verfahrensschritt [C] werden dann aus den im Verfahrensschritt [B] ermittelten farbumgestimmten Normfarbwerten X', Y' und Z' mittels der Neugebauer-Gleichungen für den Dreifarben-Druck die effektiven Flächendeckungswerte c, m und y, welche ein Maß für die Rasterpunktgrößen der Druckfarben auf dem Bedruckstoff sind, iterativ mit vorzugebener Abbruch-Bedingung berechnet.

Beim Dreifarben-Druck entstehen durch Nebeneinanderdrucken und teilweises Übereinanderdrucken von Rasterpunkten der Druckfarben "Cyan", "Magenta" und "Gelb" die Farben des Druck-Farbraumes. Durch Nebeneinanderdrucken von Rasterpunkten der Druckfarben entstehen die Primärfarben "Cyan", "Magenta" und "Gelb", durch teilweises Übereinanderdrucken von Rasterpunkten zweier Druckfarben entstehen die Sekundärfarben "Rot" "Grün" und "Blau", durch Übereinanderdrucken von Rasterpunkten aller drei Druckfarben entsteht "Schwarz" und für den Fall, daß keine Rasterpunkte gedruckt werden entsteht "Weiß". Alle Farben sind durch Normfarbwerte X, Y und Z definiert.

Die Neugebauer-Gleichungen beschreiben die im Rasterdruck zu erwartenden Normfarbwerte X, Y und Z für die gedruckten Farben als Funktion der Flächendeckungswerte c, m und y. Die Normfarbwerte X, Y und Z einer Zwischenfarbe des Druck-Farbraumes ergeben sich dabei durch Addition der Normfarbwerte X, Y und Z der Eckfarben, wobei die Normfarbwerte der Eckfarben X, Y und Z entsprechend den wahrscheinlichen oder statistischen relativen Flächenanteilen $\alpha$ der Eckfarben wirksam sind.

Die Neugebauer-Gleichungen sind beispielsweise in H. E. J. Neugebauer, "Theorie des Vierfarbenbuchdrucks mit einem Schwarzdruck", Zeitschrift für wissenschaftliche Photografie, Photophysik und Photochemie, Band 36, Heft 8/9, (1937) sowie in 1. Pobboravsky and M. Pearson, "Computation of dot areas required to match a colorimetrically specified color using the modified Neugebauer Equations", Proceedings of Tech. Meeting of TAGA (1972) p. 65-77 angegeben.

Die Normfarbwerte X, Y und Z von Drucktarben im Übereinanderdruck ergeben sich nach folgenden Gleichungen:

$$X = \alpha_p * X_p + \alpha_y * X_y + \alpha_m * X_m + \alpha_c * X_c +$$
$$\alpha_k * X_k + \alpha_b * X_b + \alpha_g * X_g + \alpha_r * X_r$$

$$Y = \alpha_p * Yp + \alpha_y * Y_y + \alpha_m * Y_m + \alpha_c * Y_c +$$
$$\alpha_k * Y_k + \alpha_b * Y_b + \alpha_g * Y_g + \alpha_r * Y_r$$

$$Z = \alpha_p * Zp + \alpha_y * Z_y + \alpha_m * Z_m + \alpha_c * Z_c +$$
$$\alpha_k * Z_k + \alpha_b * Z_b + \alpha_g * Z_g + \alpha_r * Z_r$$

mit den relativen Flächenanteilen

$$\alpha_p = (1 - y) * (1 - m) * (1 - c)$$

$$\alpha_y = ( y ) * (1 - m) * (1 - c)$$

$$\alpha_m = (1 - y) * ( m ) * (1 - c)$$

$$\alpha_c = (1 - y) * (1 - m) * ( c )$$

$$\alpha_r = ( y ) * ( m ) * (1 - c)$$

$$\alpha_g = ( y ) * (1 - m) * ( c )$$

$$\alpha_b = (1 - y) * ( m ) * ( c )$$

$$\alpha_k = ( y ) * ( m ) * ( c )$$

und den Flächendeckungen der Grundfarben

y = relative Flächendeckung Gelb
m = relative Flächendeckung Magenta
c = relative Flächendeckung Cyan

Die Indizes stehen für die Farben

| p = Papierweiß | k = Gelb + Cyan + Magenta |
|---|---|
| y = Gelb | b = Cyan + Magenta |
| m = Magenta | g = Gelb + Cyan |
| c = Cyan | r = Gelb + Magenta |

Die Normfarbwerte $X_p$, $X_y$...$Y_p$,$Y_y$ usw. sind die Normfarbwerte der Druckfarben und des "Papierweiß" des Bedruckstoffes bei voller Flächendeckung.
Durch Ausmultiplizieren und neu Zusammenfassen der obigen Gleichungen ergeben sich neue Gleichungen, die eine Darstellung in einem Koordinaten-System mit den Normfarbwerten $X_p$, $Y_p$ und $Z_p$ des "Papierweiß" als Ursprung liefern.
Die Normfarbwerte X, Y und Z von Druckfarben im Übereinanderdruck auf dem Bedruckstoff bezogen auf das "Papierweiß" ergeben sich nach den neuen Gleichungen wie folgt:

$$(X_p - X) = y * (X_p\text{-}X_y) + m * (X_p\text{-}X_m) + c * (X_p\text{-}Xc) +$$

$$y * m * [(X_p\text{-}X_r) - (X_p\text{-}X_y) - (X_p\text{-}X_m)] +$$

$$y * c * [(X_p\text{-}X_g) - (X_p\text{-}X_y) - (X_p\text{-}X_c)] +$$

$$m * c * [(X_p\text{-}X_b) - (X_p\text{-}X_m) - (X_p\text{-}X_c)] +$$

$$y * m * c * [(X_p\text{-}X_k) + (X_p\text{-}X_y) + (X_p\text{-}X_m) + (X_p\text{-}X_c) -$$

$$(X_p\text{-}X_r) - (X_p\text{-}X_g) - (X_p\text{-}X_b)]$$

$$(Y_p - Y) = y * (Y_p\text{-}Y_y) + m * (Y_p\text{-}Y_m) + c * (Y_p\text{-}Y_c) +$$

$$y * m * [(Y_p\text{-}Y_r) - (Y_p\text{-}Y_y) - (Y_p\text{-}Y_m)] +$$

$$y * c * [(Y_p\text{-}Y_g) - (Y_p\text{-}Y_y) - (Y_p\text{-}Y_c)] +$$

$$m * c * [(Y_p\text{-}Y_b) - (Y_p\text{-}Y_m) - (Y_p\text{-}Y_c)] +$$

$$y * m * c * [(Y_p\text{-}Y_k) + (Y_p\text{-}Y_y) + (Y_p\text{-}Y_m) + (Y_p\text{-}Y_c) -$$

$$(Y_p\text{-}Y_r) - (Y_p\text{-}Y_g) - (Y_p\text{-}Y_b)]$$

$$(Z_p - Z) = y * (Z_p\text{-}Z_y) + m * (Z_p\text{-}Z_m) + c * (Z_p\text{-}Z_c) +$$

$$y * m * [(Z_p\text{-}Z_r) - (Z_p\text{-}Z_y) - (Zp\text{-}Z_m)] +$$

$$y * c * [(Z_p\text{-}Z_g) - (Z_p\text{-}Z_y) - (Z_p\text{-}Z_c)] +$$

$$m * c * [(Z_p\text{-}Z_b) - (Z_p\text{-}Z_m) - (Z_p\text{-}Z_c)] +$$

$$y * m * c * [(Z_p\text{-}Z_k) + (Z_p\text{-}Z_y) + (Z_p\text{-}Z_m) + (Z_p\text{-}Z_c) -$$

$$(Z_p\text{-}Z_r) - (Z_p\text{-}Z_g) - (Z_p\text{-}Z_b)]$$

Da eine direkte Berechnung der Flächendeckungswerte c, m und y aus den neuen Gleichungen nicht möglich ist, können die Flächendeckungswerte c, m und y nur nach einem iterativen Verfahren berechnet werden.

Eine vorteilhafte Näherungslösung zur Berechnung der Flächendeckungswerte c, m und y ergibt sich unter Vernachlässigung der Werte für den Übereinanderdruck nach den Gleichungen:

$$(X_p - X) = y' * (X_p - X_y) + m' * (X_p - X_m) + c' * (X_p - X_c)$$

$$(Y_p - Y) = y' * (Y_p - Y_y) + m' * (Y_p - Y_m) + c' * (Y_p - Y_c)$$

$$(Z_p - Z) = y' * (Z_p - Z_y) + m' * (Z_p - Z_m) + c' * (Z_p - Z_c)$$

bzw. in Matrix-Schreibweise:

$$
\begin{bmatrix} X_p - X \\ Y_p - Y \\ Z_p - Z \end{bmatrix}
=
\begin{bmatrix} X_p - X_y & X_p - X_m & X_p - X_c \\ Y_p - Y_y & Y_p - Y_m & Y_p - Y_c \\ Z_p - Z_y & Z_p - Z_m & Z_p - Z_c \end{bmatrix}
*
\begin{bmatrix} y' \\ m' \\ c' \end{bmatrix}
$$

durch Matrix-Invertierung zu:

$$
\begin{bmatrix} y' \\ m' \\ c' \end{bmatrix}
=
\begin{bmatrix} X_p - X_y & X_p - X_m & X_p - X_c \\ Y_p - Y_y & Y_p - Y_m & Y_p - Y_c \\ Z_p - Z_y & Z_p - Z_m & Z_p - Z_c \end{bmatrix}^{-1}
*
\begin{bmatrix} X_p - X \\ Y_p - Y \\ Z_p - Z \end{bmatrix}
$$

Diese Näherung gilt, solange die Produkte der Flächendeckung $y * m$, $y * c$, $m * c$ und $y * m * c$ klein gegenüber den Einzelwerten y, m und c sind. Die Näherungslösung kann als Start für eine iterative Berechnung genutzt werden.

Einsetzen der Näherungswerte in die Neugebauer-Gleichungen liefert

$$(Xp - X') = y' * (X_p - X_y) + m' * (X_p - X_m) + \ldots$$

$$(Y_p - Y') = y' * (Y_p - Y_y) + m' * (Y_p - Y_m) + \ldots$$

$$(Z_p - Z') = y' * (Z_p - Z_y) + m' * (Z_p - Z_m) + \ldots$$

Der Fehler der Näherungslösung beträgt

8

$$dX = (X_p - X) - (X_p - X')$$

$$dY = (Y_p - Y) - (Y_p - Y')$$

$$dZ = (Z_p - Z) - (Z_p - Z')$$

Zur Berechnung von Korrekturwerten dy, dm und dc wird eine Reihen-Entwicklung der folgenden Form durchgeführt:

$$dX = dy * \frac{\delta(Xp\text{-}X)}{\delta y} + dm * \frac{\delta(Xp\text{-}X)}{\delta m} + dc * \frac{\delta(Xp\text{-}X)}{\delta c}$$

$$dY = dy * \frac{\delta(Yp\text{-}Y)}{\delta y} + dm * \frac{\delta(Yp\text{-}Y)}{\delta m} + dc * \frac{\delta(Yp\text{-}Y)}{\delta c}$$

$$dZ = dy * \frac{\delta(Zp\text{-}Z)}{\delta y} + dm * \frac{\delta(Zp\text{-}Z)}{\delta m} + dc * \frac{\delta(Zp\text{-}Z)}{\delta c}$$

Für die Korrekturwerte dy, dm und dc folgt in Matrizen-Schreibweise:

$$\begin{vmatrix} dy \\ dm \\ dc \end{vmatrix} = \begin{vmatrix} \delta X/\delta y & \delta X/\delta m & \delta X/\delta c \\ \delta Y/\delta y & \delta Y/\delta m & \delta Y/\delta c \\ \delta Z/\delta y & \delta Z/\delta m & \delta Z/\delta c \end{vmatrix}^{-1} * \begin{vmatrix} dX \\ dY \\ dZ \end{vmatrix}$$

mit den partiellen Ableitungen:

$$\delta X/\delta y = \frac{\delta(Xp\text{-}X)}{\delta y} = (Xp - Xy) + m' * [(Xp - Xr) + ...$$

$$\delta X/\delta m = \frac{\delta(Xp\text{-}X)}{\delta m} = (Xp - Xm) + y' * [(Xp - Xr) + ...$$

$$\delta X/\delta c = \frac{\delta(Xp\text{-}X)}{\delta c} = (Xp - Xc) + y' * [(Xp - Xr) + ...$$

Für die partiellen Ableitungen von y und z gelten äquivalente Beziehungen.
Die errechneten Korrekturwerte dy, dm und dc werden zu den Näherungswerten addiert

$$y'' = y' + dy$$

$$m'' = m' + dm$$

$$c'' = c' + dc$$

und bilden die Startwerte für einen weiteren Iterationszyklus. Die Iteration wird abgebrochen, wenn der Korrekturwertevektor eine untere Schranke erreicht. Die Flächendeckungswerte y, m, c werden für alle L*, a*, b* der Stützpunkte der Farbraumtransformations-Füllung berechnet.

In einem anderen Verfahrenschritt [D] erfolgt die Ermittlung der zugehörigen Flächendeckungswerte k für den Farbauszug "Schwarz" (Schwarzauszug) aus der im Verfahrenschritt [C] berechneten Flächendeckungswerten c, m und y nach der Gleichung.

$$k = f\,(c, m, y)$$

Der zusätzliche Druck der Farbe "Schwarz" (Skelett-Schwarz) dient dazu, den Bildkontrast in den tiefen Farbtönen zu erhöhen und die Grauwerte im Mittelund Tieftonbereich zu stabilisieren.

Im Standarddruckverfahren wird die Farbe "Schwarz" zusätzlich zu den anderen Farben gedruckt (Skelett-Schwarz). Es ist aber auch möglich, einen Teil der Tertiärfarbe durch "Schwarz" zu ersetzen. Die Fachbezeichnung hierfür ist Grey-Component-Replacement (GCR).

Die Flächendeckungswerte k für den Farbauszug "Schwarz" können beispielsweise aus dem Minimum der Flächendeckungswerte c, m und y der drei bunten Farbauszüge nach folgender Gleichung

$$k = a * \min\,(c'', m'', Y'') \qquad > a \leq 1.0$$

ermittelt werden.

Der Minimalwert kann über eine Gradations-Kennlinie in die Flächendeckungswerte k umgerechnet werden.

Durch das Hinzufügen des "Skelettschwarz" oder durch den Austausch des "Drei-Farben-Grau" durch "Schwarz" wird die Farbe im Druck in der Regel verfälscht. Daher müssen die Flächendeckungswerte c, m und y in einem weiteren Verfahrenschritt korrigiert werden.

In einem weiteren Verfahrenschritt [E] werden dann die im Verfahrensschritt [C] berechneten Flächendeckungswerte c, m und y mittels der entsprechenden Neugebauer-Gleichungen für den Vierfarben-Druck unter Vorgabe der im Verfahrenschritt [D] jeweils berechneten Flächendeckungswerte k in die neuen Flächendeckungswerte c, m und y nach folgendem, zu [C] äquivalenten Verfahren korrigiert:

Für die Farbwerte von Druckfarben im Übereinanderdruck auf Papier als Bedruckstoff gilt im Vierfarben-Druck:

$$(X, Y, Z) \;=\; \sum_i \alpha_i \; * \; (X_i, Y_i, Z_i)$$

mit

| i | $\alpha_i$ | $X_i, Y_i, Z_i$ |
|---|---|---|
| 0 | (1-y)* (1-m) * (1-c)* (1-k) | Papierweiß |
| 1 | ( y)* (1-m) * (1-c)* (1-k) | Gelb    (G) |
| 2 | (1-y)* ( m)* (1-c)* (1-k) | Magenta    (M) |
| 3 | (1-y)* (1-m) * ( c)* (1-k) | Cyan    (C) |
| 4 | ( y)* ( m)* (1-c)* (1-k) | Gelb + Magenta |
| 5 | ( y)* (1-m) * ( c) * (1-k) | Gelb + Cyan |
| 6 | (1-y)* ( m ) * ( c) * (1-k) | Magenta + Cyan |
| 7 | ( y)* ( m)* ( c)* (1-k) | G + M + C |
| 8 | (1-y)* (1-m) * (1-c)* (k) | Schwarz (5) |
| 9 | ( y)* (1-m) * (1-c)* (k) | Schwarz + Gelb |
| 10 | (1-y)* ( m ) * (1-c)* ( k ) | Schwarz + Magenta |
| 11 | (1-y)* (1-m) * ( c) * (k) | Schwarz + Cyan |
| 12 | ( y) * ( m )* (1-c)* ( k) | Schwarz + G + M |
| 13 | ( y)* (1-m) * ( c) * ( k) | Schwarz + G + C |
| 14 | (1-y)* ( m)* ( c) * ( k) | Schwarz + M + C |
| 15 | ( y)* ( m)* ( c)* ( k) | S + G + M + C |

und den relativen Flächendeckungswerten der Grundfarben

y = relativer Flächendeckungswert Gelb
m = relativer Flächendeckungswert Magenta
c = relativer Flächendeckungswert Cyan
k = relativer Flächendeckungswert Schwarz

Ausmultiplizieren und neu Zusammenfassen liefert eine Darstellung der Neugebauer-Gleichungen in einem Koordinatensystem mit dem Papierweiß $X_0$, $Y_0$, $Z_0$ als Ursprung :

$$\begin{bmatrix} X_0 - X \\ Y_0 - Y \\ Z_0 - Z \end{bmatrix} = \sum_i \beta_i * \begin{bmatrix} f(X_0 - X_i) \\ f(Y_0 - Y_i) \\ f(Z_0 - Z_i) \end{bmatrix}$$

mit

| i | $\beta_i$ | $f(X_0 - X_i)$, Y und Z entsprechend |
|---|---|---|
| 1 | y | $(X_0-X_1)$ |
| 2 | m | $(X_0-X_2)$ |
| 3 | c | $(X_0-X_3)$ |
| 4 | y*m | $(X_0-X_4) - (X_0-X_1) - (X_0-X_2)$ |
| 5 | y*c | $(X_0-X_5) - (X_0-X_1) - (X_0-X_3)$ |
| 6 | m*c | $(X_0-X_6) - (X_0-X_2) - (X_0-X_3)$ |
| 7 | y*m*c | $(X_0-X_7) - (X_0-X_4) - (X_0-X_5) - (X_0-X_6) +$ <br> $+ (X_0-X_1) + (X_0-X_2) + (X_0-X_3)$ |
| 8 | k | $(X_0-X_8)$ |
| 9 | y*k | $(X_0-X_9) - (X_0-X_1) - (X_0-X_8)$ |
| 10 | m*k | $(X_0-X_{10}) - (X_0-X_2) - (X_0-X_8)$ |
| 11 | c*k | $(X_0-X_{11}) - (X_0-X_3) - (X_0-X_8)$ |
| 12 | y*m*k | $(X_0-X_{12}) - (X_0-X_4) - (X_0-X_9) - (X_0-X1_0) +$ <br> $+ (X_0-X_1) + (X_0-X_2) + (X_0-X_8)$ |
| 13 | y*c*k | $(X_0-X_{13}) - (X_0-X_5) - (X_0-X_9) - (X_0-X_{11}) +$ <br> $+ (X_0-X_1) + (X_0-X_3) + (X_0-XX_8)$ |
| 14 | m*c*k | $(X_0-X_{14}) - (X_0-X_6) - (X_0-X_{10}) - (X_0-X_{11}) +$ <br> $+ (X_0-X_2) + (X_0-X_3) + (X_0-XX8)$ |
| 15 | y*m*c*k | $(X_0-X_{15}) - (X_0-X_7) - (X_0-X_{12}) - (X_0-X_{13}) -$ <br> $- (X_0-X_{14}) - (X_0-X_1) - (X_0-X_2) -$ <br> $- (X_0-X_3) - (X_0-X_8) +$ <br> $+ (X_0-X_4) + (X_0-X_5) + (X_0-X_6) + + (X_0-X_9) + (X_0-X_{10}) + (X_0-X_{11})$ |

und den Normfarbwerten $X_i$, $Y_i$, $Z_i$ der Druckfarben und ihrer Übereinande drucke.

Wie im Verfahrenschritt [C] erfolgt eine Näherungslösung für die Flächendeckungswerte:

$$(X_0-X) = y' * (X_0-X_1) * m'* (X_0-X_2) + c' * (X_0-X_3)$$

$$(Y_0-Y) = y' * (Y_0-Y_1) * m'* (Y_0-Y_2) + c' * (Y_0-Y_3)$$

$$(Z_0-Z) = y' * (Z_0-Z_1) * m'* (Z_0-Z_2) + c' * (Z_0-Z_3)$$

bzw. in Matrizen-Schreibweise

$$
\begin{bmatrix}
(X_0-X) \\
(Y_0-Y) \\
(Z_0-Z)
\end{bmatrix}
=
\begin{bmatrix}
(X_0-X_1) & (X_0-X_2) & (X_0-X_3) \\
(Y_0-Y_1) & (Y_0-Y_2) & (Y_0-Y_3) \\
(Z_0-Z_1) & (Z_0-Z_2) & (Z_0-Z_3)
\end{bmatrix}
*
\begin{bmatrix}
y' \\
m' \\
c'
\end{bmatrix}
$$

durch Matrix-Invertierung

$$
\begin{bmatrix}
y' \\
m' \\
c'
\end{bmatrix}
=
\begin{bmatrix}
(X_0-X_1) & (X_0-X_2) & (X_0-X_3) \\
(Y_0-Y_1) & (Y_0-Y_2) & (Y_0-Y_3) \\
(Z_0-Z_1) & (Z_0-Z_2) & (Z_0-Z_3)
\end{bmatrix}^{-1}
*
\begin{bmatrix}
(X_0-X) \\
(Y_0-Y) \\
(Z_0-Z)
\end{bmatrix}
$$

Diese Näherung gilt, solange die Produkte der Flächendeckungswerte $y*m$, $y*c$, $m*c$, .... kleingegenüber den Einzelwerten y, m, und c sind.

Die Näherungslösung kann wiederum als Start für eine iterative Berechnung genutzt werden.

Einsetzen der Näherungswerte in die Neugebauer-Gleichungen liefert:

$$(X_0\text{-}X') = y' * (X_0\text{-}X_1) + m' * (X_0\text{-}X_2) + ....$$

$$(Y_0\text{-}Y') = y' * (Y_0\text{-}Y_1) + m' * (Y_0\text{-}Y_2) + ....$$

$$(Z_0\text{-}Z') = y' * (Z_0\text{-}Z_1) + m' * (Z_0\text{-}Z_2) + ....$$

Der Fehler der Näherungslösung beträgt:

$$dX = (X_0\text{-}X) - (X_0\text{-}X')$$

$$dY = (Y_0\text{-}Y) - (Y_0\text{-}Y')$$

$$dZ = (Z_0\text{-}Z) - (Z_0\text{-}Z')$$

Zur Berechnung von Korrekturwerten dy, dm und dc wird wieder eine Reihen-Entwicklung durchgeführt

$$dX = dy * \frac{\delta(X_0\text{-}X)}{\delta y} + dm * \frac{\delta(X_0\text{-}X)}{\delta m} + dc * \frac{\delta(X_0\text{-}X)}{\delta c}$$

$$dY = dy * \frac{\delta(Y_0\text{-}Y)}{\delta y} + dm * \frac{\delta(Y_0\text{-}Y)}{\delta m} + dc * \frac{\delta(Y_0\text{-}Y)}{\delta c}$$

$$dZ = dy * \frac{\delta(Z_0\text{-}Z)}{\delta y} + dm * \frac{\delta(Z_0\text{-}Z)}{\delta m} + dc * \frac{\delta(Z_0\text{-}Z)}{\delta c}$$

Für die Korrekturwerte dy, dm und dc folgt in Matrizen-Schreibweise

$$\begin{vmatrix} dy \\ dm \\ dc \end{vmatrix} = \begin{vmatrix} \delta X / \delta y & \delta X / \delta m & \delta X / \delta c \\ \delta Y / \delta y & \delta Y / \delta m & \delta Y / \delta c \\ \delta Z / \delta y & \delta Z / \delta m & \delta Z / \delta c \end{vmatrix}^{-1} * \begin{vmatrix} dX \\ dY \\ dZ \end{vmatrix}$$

mit den partiellen Ableitungen:

$$\delta X / \delta y = \frac{\delta(X_0 - X)}{\delta y} = (X_0 - X_1) + m' * [(X_0 - X_2) + \dots$$

$$\delta X / \delta m = \frac{\delta(X_0 - X)}{\delta m} = (X_0 - X_2) + y' * [(X_0 - X_4) + \dots$$

$$\delta X / \delta c = \frac{\delta(X_0 - X)}{\delta c} = (X_0 - X_3) + y' * [(X_0 - X_4) + \dots$$

Für die partiellenAbleitungen von y und z gelten äquivalente Beziehungen.

Die errechneten Korrekturwerte dy, dm und dc werden zu den Näherungswerten addiert.

$$y'' = y' + dy$$

$$m'' = m' + dm$$

$$c'' = c' + dc$$

und bilden die Startwerte für einen weiteren Iterationszyklus. Die Iteration wird abgebrochen, wenn der Korrekturwertvektor eine untere Schranke erreicht hat. Die Flächendeckungswerte y, m, c wird für alle Farbwerte L*, a*, b* der Stützpunkte der Farbraumtransformations-Füllung berechnet, wobei der funktionale Zusammenhang zum Schwarz k vorgegeben wird.

Nach der Korrektur der Flächendeckungswerte c, m und y wird in vorteilhafter Weise noch überprüft, ob die Summe der Flächendeckungswerte c, m, y und k größer als ein vorgebbarer Grenzwert ist. Ist die der Fall, werden die Flächendeckungswerte k in kleinen Stufen erhöht, was nur möglich ist, wenn die Flächendeckungswerte c, m und y größer als Null sind, und dann eine Neuberechnung nach Verfahrenschritt [E] vorgenommen. Anderenfalls wird zu Verfahrenschritt [F] übergegangen.

In einem weiteren Verfahrenschritt [F] werden schließlich zwecks einer Druckprozeß-Anpassung die in den Verfahrenschritten [D] und [E] ermittelten effektiven Flächendeckungswerte c, m, y und k, welche ein Maß für die Größe der Rasterpunkte (Druckpunkte) der Druckfarben auf dem Bedruckstoff sind, unter Berücksichtigung des Punktzuwachses in die für die Belichtung der Farbauszüge mittels eines Farbauszugs-Belichters erforderlichen Farbauszugswerte C, M, Y und K umgerechnet, welche ein Maß für die auf den Farbauszugsfilmen zu erreichenden Rasterdichten sind.

Im Druckbild ist die optische Erscheinung der Rasterpunkte größer als die tatsächliche Größe des Rasterpunktes. Dieser Effekt wird als Punktzuwachs bezeichnet. Der Punktzuwachs resultiert daraus, daß durch Lichtfang an den Grenzen des Rasterpunktes eine optische Vergrößerung hervorgerufen wird, die von Form und Größe der Rasterpunkte abhängig ist. Die Übertragungs-Kennlinie für den Punktzuwachs im Druck läßt sich näherungsweise analytisch nach folgender Gleichung beschreiben:

Punktzuwachs im Druck

$$Fd = \frac{1 - L^{Fv/100}}{1 - L} * 100 \qquad \text{mit} \qquad L = \left[\frac{50 - F50}{50 + F50}\right]^2$$

und

$F_d =$ Flächendeckungswert im Druck in %
$F_v =$ Flächendeckungswert des Farbauszugsfilms in %
$F_{50} =$ Punktzuwachs beim 50% Rasterpunkt des Farbauszugsfilms in %

Aus der obigen Gleichung läßt sich eine inverse Punktzuwachs-Korrektur bestimmen, nach der die effektiven Flächendeckungswerte c, m, y und k für den Druck in die Farbauszugswerte C, M, Y und K für die Belichtung der Farbauszüge auf einem Filmmaterial korrigiert werden. Die inverse Gleichung lautet:
Punktzuwachskorrektur auf Film

$$Fv = \frac{\ln (1 - Fd * (1 - L)/100)}{\ln (L)}$$

Die zuvor beschriebenen Verfahrensschritte werden für jeden Stützpunkt (i,j,k) des Stützpunkt-Gerüstes im CIELAB-Farbraum wiederholt. Die für jeden Stützpunkt in Abhängigkeit von den zugehörigen Farbwerten L*, a* und b* näherungsweise berechneten Farbauszugswerte C,Y, M, Y und K werden als Druck-Tabelle über den Eingang (13) in die LUT des Ausgabe-Farbumsetzers (12) des Farbbildbearbeitungssystems nach Fig. 1 geladen.
Danach erfolgt die Farbwert-Kalibrierung der näherungsweise berechneten Druck-Tabelle.

## Farbwert-Kalibrierung der näherungsweise berechneten Druck-Tabelle

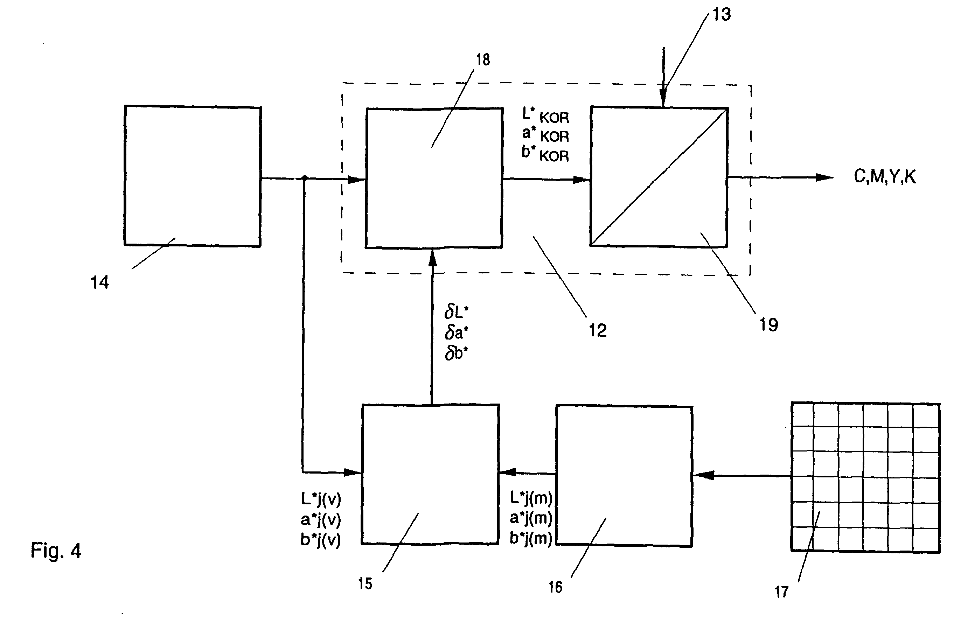

Fig. 3 zeigt einen Ablauf-Diagramm zur Farbwert-Kalibrierung und Fig. 4 ein Blockschaltbild einer Einrichtung zur Ermittlung von Korrekturwerten für die Farbwert-Kalibrierung.
Die Einrichtung nach Fig. 4 besteht aus einer Datenquelle (14) zur Speicherung der Farbdaten einer Testtafel, dem Ausgabe-Farbumsetzer (12) nach Fig. 1, einer Vergleichs-Stufe (15) zur Ermittlung von Korrekturwerten und einem Farbmeßgerät (16) zum farbmetrischen Ausmessen eines Andrucks (17) oder Proofs einer Testtafel. Der Ausgabe-Farbumsetzer (12) weist eine Korrekturwert-Stufe (18) zur Ermittlung von korrigierten Farbwerten und einen Umsetzungs-Speicher (19) zur Ablage der näherungsweise berechneten Druck-Tabelle C,M,Y, K = f (L*,a* b*) auf.
Bei der Farbwert-Kalibrierung laufen folgende Verfahrensschritte [G] bis [K] ab:
In einem Verfahrenschritt [G] wird zunächst eine Testtafel mit einer Anzahl (j) von Farbfeldern generiert, deren Farbwerte in einem standardisierten Kommunikations-Farbraum, beispielsweise als Farbwerte L*, a* und b* des CIELAB-Farbraumes, definiert sind. Anzahl und Verteilung der Farbfelder bestimmen die Qualität der Farbwert-Kalibrierung. Die Farbfelder sollten gleichabständig im Druck-Farbraum verteilt sein. Als Testtafel kann z.B. eine zur Farbtafel der Firma Kodak (Q-60A oder C) äquivalente Anordnung verwendet werden.
Die Farbwerte $L^*_j(v)$, $a^*_j(v)$ und $b^*_j(v)$ der einzelnen Farbfelder (j) der Testtafel können bereits als digitalisierte Farbdaten vorliegen oder durch optoelektronische Abtastung der Testtafel in einem kalibrierten Farbscanner gewonnen werden. Die Farbwerte $L^*_j(v)$, $a^*_j(v)$ und $b^*_j(v)$, welche Sollwerte für den Druckprozeß darstellen, sind in der Datenquelle (14) der Einrichtung abgelegt.
In einem anschließenden Verfahrenschritt [H] werden die Druckformen der Testtafel belichtet und anschließend die Testtafel mit einer Andruckmaschine mit dem für den späteren Nutzdruck vorgesehenen Druckverfahren und auf dem vorgesehenen Bedruckstoff angedruckt oder als Proof mit einem geeigneten Proof-Verfahren erstellt.
Die Herstellung der Druckformen erfolgt beispielsweise mittels eines Farbauszugs-Recorders. Die Farbdaten $L^*_j(v)$ $a^*_j(v)$ und $b^*_j(v)$ der Testtafel werden zunächst mittels der im Umsetzungs-Speicher (19) des Farbumsetzers (12) abgelegten Druck-Tabelle C,M,Y, K = f (L*,a* b*) in die Farbauszugswerte C, M, Y und K umgeformt, wobei der Korrekturwert-Speicher (18) unwirksam ist. Mit den Farbauszugswerten C, M, Y und K werden dann die Farbauszüge punkt- und zeilenweise auf Film belichtet.
In einem weiteren Verfahrenschritt [I] werden die Farbwerte $L^*_j(m)$, $a^*_j(m)$ und $b^*_j(m)$ der Farbfelder des Andrucks (17) oder des Proofs farbmetrisch mit einem geeigneten Farbmeßgerat (16), z.B. mit einem Spektralphotometer als Istwerte ausgemessen. Falls das Spektralphotometer nur die Normfarbwerte $X_j(m)$, $Y_j(m)$ und $Z_j(m)$ der Farbfelder

mißt, müssen sie in die Farbwerte $L^*_j(m)$, $a^*_j(m)$ und $b^*_j(m)$ transformiert werden. Voraussetzung für eine exakte Bestimmung der Farbwerte $L^*_j(m)$, $a^*_j(m)$ und $b^*_j(m)$ ist, daß das Bezugs-Weiß (Referenz-Weiß) der Testtafel und des Andrucks bzw. Proofs gleich sind. Anderenfalls ist eine Farbumstimmungs-Transformation erforderlich.

In einem weiteren Verfahrenschritt [**J**] werden die Farbwerte $L^*j(v)$, $a^*j(v)$ und $b^*j(v)$ der Farbfelder der Testtafel mit den gemessenen Farbwerten $L^*j(m)$, $a^*j(m)$ und $b^*j(m)$ der entsprechenden Farbfelder des Andrucks (17) in einem Vergleicher (15) miteinander verglichen und aus dem Vergleich Farbdifferenzwerte $L^*_j(m)$-$L^*_j(v)$, $a^*_j(m)$- $a^*_j(v)$ und $b^*_j(m)$- $b^*_j(v)$ ermittelt.

In einem weiteren Verfahrenschritt [**K**] werden dann aus den Farbdifferenzwerten $L^*_j(m)$-$L^*_j(v)$, $a^*_j(m)$- $a^*_j(v)$ und $b^*_j(m)$- $b^*_j(v)$ werden dann Korrekturfarbwerte $dL^*$, $da^*$ und $db^*$ in Form einer Korrekturwert-Tabelle berechnet und die korrigierten Farbwerte $L^*_{KOR}$, $a^*_{KOR}$ und $b^*_{KOR}$ in einer Korrekturwert-Stufe (18) durch eine gewichtete Addition von Korrekturfarbwerten $dL^*$, $da^*$ und $db^*$ und den Farbwerten $L^*_j(v)$, $a^*_j(v)$ und $b^*_j(v)$ nach folgenden Gleichungen ermittelt:

$$L^*_{KOR} = L^*_j(v) + dL^*$$

$$a^*_{KOR} = a^*_j(v) + da^*$$

$$b^*_{KOR} = b^*_j(v) + db^*$$

Zur Ermittlung der korrigierten Farbwerte $L^*_{KOR}$, $a^*_{KOR}$ und $b^*_{KOR}$ können zwei Wege beschritten werden. Zum ersten können die Korrekturfarbwerte $dL^*$, $da^*$ und $db^*$ gespeichert und dann während der eigentlichen Farbtransformation den Farbwerten $L^*$, $a^*$ und $b^*$ der Druck-Tabelle laufend in der Korrekturwert-Stufe (18) hinzuaddiert werden. Zum zweiten kann die Addition der Korrekturfarbwerte $dL^*$, $da^*$ und $db^*$ und der Farbwerte $L^*$, $a^*$ und $b^*$ vor der eigentlichen Farbtransformation zur Bildung der korrigierten Farbwerte $L^*_{KOR}$, $a^*_{KOR}$ und $b^*_{KOR}$ erfolgen. Die korrigierten Farbwerte $L^*_{KOR}$, $a^*_{KOR}$ und $b^*_{KOR}$ werden dann in der Korrekturwert-Stufe (18) gespeichert und während der Farbtransformation aus der Korrekturwert-Stufe (18) ausgelesen und weiterverarbeitet.

In zweckmäßiger Weise werden die Farbwerte $L^*_j(v)$, $a^*_j(v)$ und $b^*_j(v)$ der Druck-Tabelle und die zugehörigen Korrekturfarbwerte $dL^*$, $da^*$ und $db^*$ nur für ein Stützwertgerüst des theoretisch möglichen Farbraumes berechnet und die bei der späteren laufenden Farbumsetzung tatsächlich benötigten korrigierten Farbwerte $L^*_{KOR}$, $a^*_{KOR}$ und $b^*_{KOR}$ durch Interpolation im Stützgerüst ermittelt.

Bei einem Stützpunktgerüst mit beispielsweise 32 x 32 x 32 = 32768 Stützstellen für die Farbwerte ist es zweckmäßig, die Farbwert-Kalibrierung nach einem Ausgleichs-Verfahren mit einer geringeren Anzahl von Farbwerten durchzuführen.

Die Berechnung der Korrekturfarbwerte $dL^*$, $da^*$ und $db^*$ nach dem Ausgleichs-Verfahren erfolgt in vorteilhafter Weise durch eine farbmetrische Abstandsbewertung mittels einer Gewichtungs- oder Abstands-Funktion $f(j)$ gemäß folgenden Gleichungen:

$$dL^* = \Sigma_j \, [f(j) \times (L^*_j(m) - L^*_j(v))] \, / \, \Sigma_j \, [f(j)]$$

$$da^* = \Sigma_j \, [f(j) \times (a^*_j(m) - a^*_j(v))] \, / \, \Sigma_j \, [f(j)]$$

$$db^* = \Sigma_j \, [f(j) \times (b^*_j(m) - b^*_j(v))] \, / \, \Sigma_j \, [f(j)]$$

wobei bedeuten:

| | |
|---|---|
| $dL^*$, $da^*$, $db^*$ = | Korrekturfarbwerte |
| $L^*_j(v)$, $a^*_j(v)$, $b^*_j(v)$ = | Meßwerte Testtafel |
| $L^*_j(m)$, $a^*_j(m)$, $b^*_j(m)$ = | Meßwerte Andruck u n d |
| $f(j)$ = | Abstands-Funktion |
| $j$ = | Laufindex |

Dabei läuft die Summation $j$ über alle Farbfelder der Testtafel.

EP 0 723 728 B1

Die Abstands-Funktion f(j) ist z.B. in zweckmäßiger Weise eine inverse Funktion 4. Ordnung nach folgender Gleichung:

$$f(j) = 1/ [(L^* - L^*_j(m))2 + (a^* - a^*_j(m))^2 + (b^* - b^*_j(m))^2]^2$$

Die Abstand-Funktion f(i) berücksichtigt Farbfelder der Testtafel in der Nähe der aktuellen Stützstelle stärker als weiter entfernte Farbfelder. Die Wahl der Abstands-Funktion bestimmt die Güte und Konvergenz des Verfahrens.

Damit ist dias Verfahren abgeschlossen und die Ausgabe-Farbtransformation berechnet. Stellt sich heraus, daß der Fehler bei einem bestimmten Anwendungsfall zu groß ist, kann das Verfahren mit dieser neuen angenäherten Druck-Tabelle wiederholt werden bis die gewünschte Abweichung erreicht bzw. unterschritten ist.

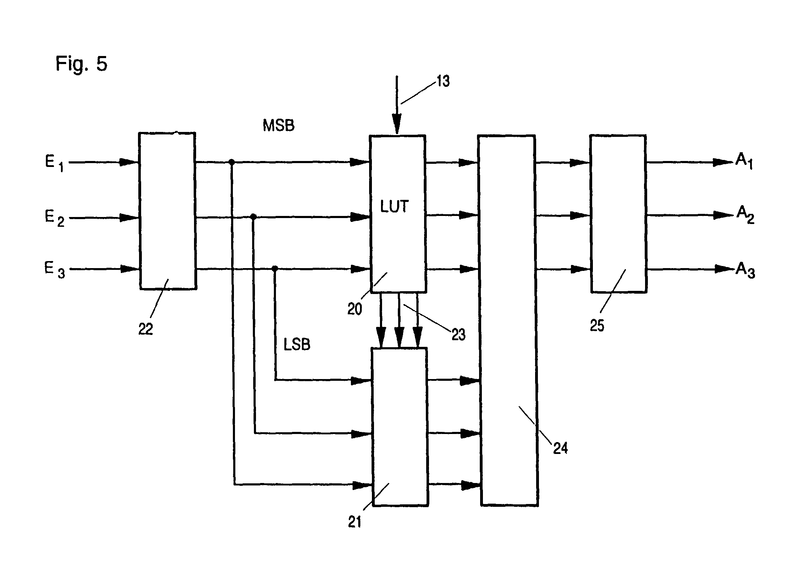

Fig. 5 zeigt den prinzipiellen Aufbau des dreidimensionalen Ausgabe-Farbumsetzers (12) mit einem dreidimensionalem Tabellen-Speicher (20), auch mit Look-Up-Table (LUT) bezeichnet, und einer Interpolations-Stufe (21) für den Fall, daß die Druck-Tabelle zunächst nur für ein Stützpunkt-Gerüst von grob gestuften Farbwerten berechnet wird und die während des Betriebes tatsächlich benötigten Ausgangs-Farbwerte durch eine dreidimensionale Interpolations-Rechnung ermittelt werden. Die zuvor berechnete, grob gestufte Druck-Tabelle wurde über den Eingang (13) des Eingabe-Farbumsetzers (12) in dem Tabellen-Speicher (20) abgelegt. Die Eingangs-Farbwerte E1, E2 und E3 des Eingabe-Umsetzers (12), beispielsweise die Farbwerte L*, a* und b* werden zunächst in einem Register (22) zwischengespeichert und für die weiteren Operationen in beispielsweise fünf hochwertige Bits (MSB) und drei niederwertige Bits (LSB) zerlegt, wobei die hochwertigen Bits dem Tabellen-Speicher (20) als Adressen und die niederwertigen Bits der Interpolations-Stufe (21) als Rechengröße zugeführt werden. In der Interpolations-Stufe (21) werden dann aus den den niederwertigen Bits und den entsprechenden Stützpunkten, die der Interpolations-Stufe (21) über eine Leitung (23) zugeführt werden, Interpolationswerte berechnet. Die Interpolationswerte werden mit den Stützwerten in einem Addierer (24) zu den Ausgangs-Farbwerten A1, A2 und A3 des Ausgabe-Farbumsetzers (12), beispielsweise zu den Farbauszugswerten C, M und Y verknüpft und in einem Ausgangsregister (25) abgelegt.

## Patentansprüche

1.  Verfahren zur Umsetzung von Farbwerten eines ersten Farbraumes in die Farbwerte eines für einen Druckprozeß charakteristischen zweiten Farbraumes (Druck-Farbraum) bei Geräten und Systemen für die Farbbildbearbeitung, bei dem

    -   aus Farbwerten des ersten Farbraumes die funktionsmäßig zugehörigen Farbwerte des zweiten Farbraumes als Umsetzungs-Tabelle näherungsweise analytisch berechnet werden,
    -   die Farbwerte des ersten Farbraumes mittels der angenäherten Umsetzungs-Tabelle in die entsprechenden Farbwerte des zweiten Farbraumes umgerechnet werden **und**
    -   die Farbwerte der angenäherten Umsetzungs-Tabelle durch eine Farbwert-Kalibrierung korrigiert werden, indem
    -   Farbdifferenzwerte aus einem Vergleich von Soll-Farbwerten und Ist-Farbwerten gewonnen und aus den Farbdifferenzwerten nach einem Ausgleichs-Verfahren Korrekturwerte für die angenäherte Umsetzungs-Tabelle ermittelt werden, **dadurch gekennzeichnet,** daß zur exakten Anpassung der Farbauszugswerte an den jeweiligen Druckprozeß
    -   aus den Farbwerten [L*,a*,b*] des ersten Farbraumes die entsprechenden Farbauszugswerte [C,M,Y,K] des Druck-Farbraumes für den jeweiligen Druckprozeß unter Berücksichtigung der Druckfarben des Druck-Farbraumes für das verwendete Druckverfahren, der farbmetrischen Eigenschaften des im Druckprozeß benutzten Bedruckstoffes und der Druckprozeß-Parameter als Druck-Tabelle [C,M,Y,K = f (L*,a*,b*)] näherungsweise analytisch berechnet werden,
    -   aus den charakteristischen Farbwerten [L*(v),a*(v),b*(v)] einer Testtafel [14] die zugehörigen Farbauszugswerte [C,M,Y,K] anhand der angenäherten Druck-Tabelle [C,M,Y,K = f (L*,a*,b*)] ermittelt werden,
    -   mit den ermittelten Farbauszugswerten [C,M,Y,K] unter Berücksichtigung der Druckprozeß-Parameter für den späteren Druck eine Farbtafel [17 ] angedruckt oder als Proof hergestellt und farbmetrisch ausgemessen wird,
    -   zur Ermittlung der Farbdifferenzwerte [L*(m) - L*(v), a*(m) - a*(v), b*(m) - b*(v)] die durch Ausmessen der Farbtafel [17] gewonnenen Farbwerte [L*(m),a*(m),b*(m)] als Ist-Farbwerte und die charakteristischen Farbwerte [L*(v),a*(v),b*(v)] der Testtafel [14] als Soll-Farbwerte verwendet werden **und**
    -   die Farbwerte [L*(v),a*(v),b*(v)] der Testtafel [14] durch die Korrekturwerte (dL*,da*,db*) in die Farbwerte [L*, a*,b*] vorkorrigiert werden, wobei die vorkorrigierten Farbwerte [L*,a*,b*] die Eingangs-Farbwerte der angenäherten Druck-Tabelle [C,M,Y,K = f (L*,a*,b*)] sind.

2. Verfahren nach Anspruch 1, **<u>dadurch gekennzeichnet,</u>** daß als erster Farbraum ein empfindungsgemäß, gleichabständig gestufter Farbraum (NormFarbraum, beispielsweise der CIELAB-Farbraum, verwendet wird.

3. Verfahren nach Anspruch 1 oder 2, **<u>dadurch gekennzeichnet,</u>** daß zur näherungsweisen analytischen Berechnung der Druck-Tabelle [C,M,Y,K = f (L*,a* ,b*)]

   - die Farbwerte [L*,a* ,b*] des ersten Farbraumes unter Berücksichtigung der Lichtart in die Normfarbwerte [X, Y,Z] des CIE 1931 XYZ-Farbraumes transformiert werden,
   - die Normfarbwerte [X,Y,Z] durch eine Farbumstimmungs-Transformation auf das Bezugsweiß des jeweiligen Bedruckstoffes hin umgestimmt werden,
   - aus den umgestimmten Normfarbwerten [X',Y',Z'] mit Hilfe der Neugebauer-Gleichungen für den Dreifarben-Druck die effektiven Flächendeckungswerte [c,m,y] berechnet werden, welche ein Maß für die Rasterpunktgrößen der drei Druckfarben auf dem Bedruckstoff sind,
   - aus den effektiven Flächendeckungswerten [c,m,y] der drei bunten Druckfarben die funktionsmäßig zugehörigen Flächendeckungswerte [k] für die Druckfarbe "Schwarz" (Schwarzauszug) berechnet werden,
   - aus den effektiven Flächendeckungswerten [c,m,y] der drei bunten Druckfarben mit Hilfe der Neugebauer-Gleichungen für den Vierfarben-Druck unter Vorgabe der Flächendeckungswerte [k] der Druckfarbe "Schwarz" korrigierte effektive Flächendeckungswerte [c,m,y] berechnet werden **und**
   - die korrigierten effektiven Flächendeckungswerte [c,m,y] sowie dem Wert [k] unter Berücksichtigung des Punktzuwachses im Druck in die Farbauszugswerte [C,M,Y, K] der Druck-Tabelle umgerechnet werden.

4. Verfahren nach Anspruch 3, **<u>dadurch gekennzeichnet,</u>** daß die Farbumstimmungs-Transformation der Normfarbwerte [X,Y,Z] nach der "von Kries"-Transformation durchgeführt wird.

5. Verfahren nach Anspruch 3, **<u>dadurch gekennzeichnet,</u>** daß die Flächendeckungswerte [k] für die Druckfarbe "Schwarz" aus dem jeweiligen Minimalwert der effektiven Flächendeckungswerten [c",m",y"] der drei bunten Druckfarben berechnet werden.

6. Verfahren nach Anspruch 3, **<u>dadurch gekennzeichnet,</u>** daß

   - die Berechnung und Korrektur der effektiven Flächendeckungswerte mit Hilfe der Neugebauer-Gleichungen für den Dreifarben-Druck und Vierfarben-Druck iterativ nach einem Näherungsverfahren unter Vernachlässigung der durch den Übereinanderdruck von Rasterpunkten entstandenen Farbwerte durchgeführt wird,
   - der Fehler der Näherungslösung mit einem durch eine Reihen-Entwicklung gewonnenen Korrekfurwert korri-giert wird **und**
   - die Iteration abgebrochen wird, sobald der Korrekturwert einen vorgebbaren unteren Grenzwert erreicht hat.

7. Verfahren nach Anspruch 3, **<u>dadurch gekennzeichnet,</u>** daß

   - nach der Farbumstimmungs-Transformation überprüft wird, ob die umgestimmten Normfarbwerte [X',Y',Z'] im jeweiligen Druck-Farbraum liegen **und**
   - falls die umgestimmten Normfarbwerte [X',Y',Z'] nicht im Druck-Farbraum liegen, eine Abbildung der nicht druckbaren Farbwerte auf die Oberfläche des Druck-Farbraumes unter Erhaltung des Farbtones sowie unter gleichmäßiger Reduzierung von Helligkeit [L*] und Buntheit [db*] durchgeführt wird.

8. Verfahren nach Anspruch 3, **<u>dadurch gekennzeichnet,</u>** daß

   - nach der Korrektur der effektiven Flächendeckungswerte [c,m,y,k] überprüft wird, ob die Summe der Flächendeckungswerte größer als ein vorgebbarer Grenzwert ist **und**
   - falls dies der Fall ist, die Flächendeckungswerte [k] in kleinen Stufen erhöht werden und eine Neuberechnung der Flächendeckungswerte nach den Neugebauer-Gleichungen für den Vierfarben-Druck vorgenommen wird.

9. Verfahren nach einem der Ansprüche 1 bis 6, **<u>dadurch gekennzeichnet,</u>** daß zur Korrektur der näherungsweise berechneten Druck-Tabelle [C,M,Y,K = f (L*,a* ,b*)]

   - eine Anzahl von Farben [j] enthaltene Testtafel generiert und die Farbwerte [L*$_j$(v),a*$_j$(v),b*$_j$(v)] der Farbfelder als Sollwerte ermittel werden,
   - die Soll-Farbwerte [L*$_j$(v),a*$_j$(v),b*$_j$(v)] der Testtafel anhand der näherungsweise berechneten Druck-Tabelle

[C,M,Y,K = f (L\*,a\*,b\*)] in die Farbauszugswerte [C,M,Y,K] umgewandelt werden,

- die Testtafel mit Hilfe der Farbauszugswerte [C,M,Y,K] auf dem späteren Bedruckstoff angedruckt oder als Proof erstellt wird,

- die Ist-Farbwerte [$L^*_j(m), a^*_j(m), b^*_j(m)$] der entsprechenden Farben der als Andruck oder Proof vorliegenden Testtafel farbmetrisch ausgemessen werden,

- die Soll-Farbwerte [$L^*_j(v), a^*_j(v), b^*_j(v)$] und die zugehörigen Ist-Farbwerte [$L^*_j(m), a^*_j(m), b^*_j(m)$] miteinander verglichen werden, **und**

- aus den durch Vergleich der Soll-Farbwerte und der Ist-Farbwerte gewonnenen Farbdifferenzwerten entsprechende Korrekturfarbwerte [dL\*,da\*,db\*] für die Farbwerte [L\*,a\*,b\*] der Druck-Tabelle [C,M,Y,K = f (L\*,a\*, b\*)] nach einem Ausgleichsverfahren berechnet werden.

10. Verfahren nach Anspruch 9, **dadurch gekennzeichnet,** daß die Korrekturfarbwerte [dL\*, da\*, db\*] aus den Soll-Farbwerten [$L^*_j(v), a^*_j(v), b^*_j(v)$] und den farbmetrisch gemessenen Ist-Farbwerten [$L^*_j(m), a^*_j(m), b^*_j(m)$] der Testtafel mit farbmetrischer Abstandsbewertung durch eine Abstands-Funktion [f(j)] nach folgender Gleichung berechnet werden:

$$dL^* = \Sigma_j [f(j) \times (L^*_j(m) - L^*_j(v))] / \Sigma_j [f(j)]$$

$$da^* = \Sigma_j [f(j) \times (a^*_j(m) - a^*_j(v))] / \Sigma_j [f(j)]$$

$$db^* = \Sigma_j [f(j) \times (b^*_j(m) - b^*_j(v))] / \Sigma_j [f(j)]$$

- und die korrigierten Farbwerte [$L^*_{KOR}, a^*_{KOR}, b^*_{KOR}$] aus den Farbwerten [L\*, a\*, b\*] und den Korrekturfarbwerten [dL\*, da\*, db\*] durch Addition nach folgender Gleichung ermittelt werden:

$$L^*_{KOR} = L^* + dL^*$$

$$a^*_{KOR} = a^* + da^*$$

$$b^*_{KOR} = b^* + db^*$$

wobei bedeuten:

| | |
|---|---|
| dL\*, da\*, db\* = | Korrekturfarbwerte |
| $L^*_j(v), a^*_j(v), b^*_j(v)$ = | Meßwerte Testtafel |
| $L^*_j(m), a^*_j(m), b^*_j(m)$ = | Meßwerte Andruck |
| f(j) = | Abstands-Funktion |

11. Verfahren nach Anspruch 9 oder 10, **dadurch gekennzeichnet,** daß als Abstands-Funktion eine Funktion 4. Ordnung der Form:

$$f(j) = 1 / [(L^* - L^*_j(m))^2 + (a^* - a^*_j(m))^2 + (b^* - b^*_j(m))^2]^2$$

verwendet wird.

12. Verfahren nach einem der Ansprüche 1 bis 11, **dadurch gekennzeichnet,** daß die Testtafel eine Farbtafel mit farbmetrisch definierten Farbfeldern ist.

13. Verfahren nach einem der Ansprüche 1 bis 12, **dadurch gekennzeichnet,** daß die Farben der Farbfelder der Testtafel im Farbraum visuell gleichabständig gewählt sind.

14. Verfahren nach einem der Ansprüche 1 bis 13, **dadurch gekennzeichnet,** daß die Ist-Farbwerte [$L^*_j(m)$, $a^*_j(m)$, $b^*_j(m)$] der Farben der Testtafel mittels eines Spektralphotometers, eines Colorimeters oder eines entsprechend kalibrierten Eingabegerätes (1, 2, 3), insbesondere Farbabtasters, ausgemessen werden.

15. Verfahren nach einem der Ansprüche 1 bis 14, **dadurch gekennzeichnet,** daß die Korrekturfarbwerte [$dL^*$, $da^*$, $db^*$] gespeichert und während der laufenden Farbumsetzung den gespeicherten Farbwerten [$L^*_j(v)$, $a^*_j(v)$, $b^*_j(v)$] vorzeichenrichtig hinzuaddiert werden, um die korrigierten Farbwerte [$L^*_{KOR}$, $a^*_{KOR}$, $b^*_{KOR}$] zu erhalten.

16. Verfahren nach einem der Ansprüche 1 bis 15, **dadurch gekennzeichnet,** daß die Korrekturfarbwerte [$dL^*$, $da^*$, $db^*$] vor der laufenden Farbumsetzung den gespeicherten Farbwerten [$L^*_j(v)$, $a^*_j(v)$, $b^*_j(v)$] vorzeichenrichtig hinzuaddiert werden, um die korrigierten Farbwerte [$L^*_{KOR}$, $a^*_{KOR}$, $b^*_{KOR}$] zu erhalten.

17. Verfahren nach einem der Ansprüche 1 bis 16, **dadurch gekennzeichnet,** daß anhand der korrigierten Farbwerte ($L^*_{KOR}$, $a^*_{KOR}$, $b^*_{KOR}$] eine neue Druck-Tabelle [C,M,Y,K = f ($L^*$,$a^*$,$b*$)] errechnet wird.

18. Verfahren nach einem der Ansprüche 1 bis 17, **dadurch aekennzeichnet,** daß die Farbwerte der Druck-Tabelle [C,M,Y,K = f ($L^*$,$a^*$,$b^*$)] als dreidimensionale Look-Up-Table (LUT) gespeichert werden.

19. Einrichtung zur Umsetzung von Farbwerten eines ersten Farbraumes in die Farbauszugswerte eines Druck-Farbraumes bei Geräten und Systemen für die Farbbildverarbeitung, **gekennzeichnet durch**

   - eine Datenquelle (14) zur Speicherung der Soll-Farbwerte [$L^*_j(v)$, $a^*_j(v)$, $b^*_j(v)$] der Farben einer Testtafel,
   - einen Tabellen-Speicher (19) zur Ablage einer näherungsweise berechneten Druck-Tabelle [C,M,Y,K = f ($L^*$, $a^*$,$b^*$)],
   - ein Meßgerät (16) zum farbmetrischen Bestimmen der Ist-Farbwerte [$L^*_j(m)$, $a^*_j(m)$, $b^*_j(m)$] der Farben eines Andrucks (17) oder Proofs der Testtafel,
   - eine Vergleichs-Stufe (15), deren Eingänge mit den Ausgängen der Datenquelle (14) und des Meßgerätes (16) verbunden sind, zum Vergleichen der Soll-Farbwerte [$L^*_j(v)$, $a^*j(v)$, $b^*_j(v)$] der Farben der Testtafel mit den gemessenen Ist-Farbwerten [$L^*_j(m)$, $a^*_j(m)$, $b^*_j(m)$] der Farben des Andrucks (17) oder Proofs der Testtafel **und** durch
   - eine Korrekturwert-Stufe (18), deren Eingänge an die Ausgänge der Datenquelle (14) und der Vergleichs-Stufe (15) und deren Ausgang an den Eingang des Tabellen-Speichers (19) angeschlossen sind, zur Gewinnung von Farbkorrekturwerten [$dL^*$, $da^*$, $db*$] aus den durch Vergleich der Soll-Farbwerte [$L^*_j(v)$, $a^*_j(v)$, $b^*_j(v)$] mit den Ist-Farbwerten [$L^*_j(m)$, $a^*_j(m)$, $b^*_j(m)$] gewonnenen Farbdifferenzwerten und zur Erzeugung von korrigierten Farbwerten [$L^*_{KOR}$, $a^*_{KOR}$, $b*_{KOR}$] für die Farbumsetzung.

20. Einrichtung nach Anspruch 19, **dadurch gekennzeichnet,** daß die Korrekturwert-Stufe (18) einem zweiten Tabellenspeicher zur Ablage der korrigierten Farbwerte [$L^*_{KOR}$, $a^*_{KOR}$, $b^*_{KOR}$] aufweist.

21. Einrichtung nach Anspruch 19 oder 20, **dadurch gekennzeichnet,** daß die Korrekturwert-Stufe (18) einen Interpolator aufweist.

22. Einrichtung nach einem der Ansprüche 19 bis 21, **dadurch gekennzeichnet,** daß als Farbmeßgerät (16) ein Colorimeter, ein Spektralphotometer oder ein entsprechend kalibriertes Eingabegerät, vorzugsweise ein Farbabtaster, verwendet wird.

**Claims**

1. A method for the conversion of colour values of a first colour space into the colour values of a second colour space (print colour space) characteristic of a printing process, in apparatus and systems for colour image processing, in which

   - from colour values of the first colour space, the associated colour values of the second colour space, in terms of function, are calculated analytically in an approximate manner as a conversion table,
   - the colour values of the first colour space are converted into the corresponding colour values of the second colour space by means of the approximated conversion table, and
   - the colour values of the approximated conversion table are corrected by a colour value calibration, in which

- colour difference values are obtained from a comparison of nominal colour values and actual colour values and correction values for the approximated conversion table are determined from the colour difference values according to an equalization process, <u>characterised in that</u> for the exact adaptation of the colour separation values to the respective printing process
- from the colour values [L*, a*, b*] of the first colour space, the corresponding colour separation values [C,M,Y,K] of the printing colour space are calculated analytically in an approximate manner for the respective printing process, taking into account the printing colours of the printing colour space for the printing method which is used, the colorimetric characteristics of the printed material used in the printing process and the printing process parameters as printing table [C,M,Y,K= f (L*, a*, b*)],
- from the characteristic colour values [L*(v), a*(v), b*(v)] of a test table [14] the associated colour separation values [C,M,Y,K] are determined by means of the approximated print table [C,M,Y,K=f(L*, a*, b*)],
- with the determined colour separation values [C,M,Y,K], taking into account the printing process parameters for the later printing, a colour table [17] is printed or is produced as a proof and is measured colorimetrically,
- to determine the colour difference values [L*(m) - L*(v), a*(m) - a*(v), b*(m) - b*(v)], the colour values [L*(m), a*(m), b*(m)] obtained by measurement of the colour table [17] are used as actual colour values and the characteristic colour values [L*(v), a*(v), b*(v)] of the test table [14] are used as nominal colour values and
- the colour values [L*(v), a*(v), b*(v)] of the test table [14] are precorrected by the correction values [dL*, da*, db*) into the colour values [L*, a*, b*], in which the precorrected colour values [L*, a*, b*] are the initial colour values of the approximated print table [C,M,Y,K=f(L*, a*, b*)].

2. The method according to Claim 1, <u>characterised in that</u> as first colour space a colour space is used (standard colour space, for example the CIELAB colour space) which is graduated with equal spacing in accordance with sensitivity.

3. The method according to Claim 1 or 2, <u>characterised in that</u> for the approximate analytical calculation of the print table [C,M,Y,K=f(L*, a*, b*)]

- the colour values [L*, a*, b*] of the first colour space, taking into account the type of light, are transformed into the standard colour values [X,Y,Z] of the CIE 1931 XYZ colour space,
- the standard colour values [X,Y,Z] are retuned by a colour retuning transformation to the reference white of the respective printed material,
- from the retuned standard colour values [X', Y', Z'], by means of the Neugebauer equations for three-colour printing, the effective area coverage values [c,m,y] are calculated, which are a measurement for the screen point sizes of the three printing colours on the printed material,
- from the effective area coverage values [c,m,y] of the three coloured printing colours, the associated area coverage values [k] in terms of function are calculated for the printing colour "black" (black separation),
- from the effective area coverage values [c,m,y] of the three coloured printing colours by means of the Neugebauer equations for four-colour printing, with advance information of the area coverage values [k] of the printing colour "black", corrected effective area coverage values [c,m,y] are calculated and
- the corrected effective area coverage values [c,m,y] and also the value [k], taking into account the point increase in printing, are converted into the colour separation values [C,M,Y,K] of the print table.

4. The method according to Claim 3, <u>characterised in that</u> the colour retuning transformation of the standard colour values [X,Y,Z] is carried out according to the "von Kries" transformation.

5. The method according to Claim 3, <u>characterised in that</u> the area coverage values [k] for the printing colour "black" are calculated from the respective minimal value of the effective area coverage values [c", m", y"] of the three coloured printing colours.

6. The method according to Claim 3, <u>characterised in that</u>

- the calculation and correction of the effective area coverage values is carried out by means of the Neugebauer equations for three-colour printing and four-colour printing iteratively according to an approximation method, neglecting the colour values arising by the printing of screen points one over another,
- the error of the approximation solution is corrected by a correction value obtained by a series development and
- the iteration is stopped as soon as the correction value has reached a lower threshold value which is able to be preset.

**7.** The method according to Claim 3, <u>characterised in that</u>

- after the colour retuning transformation, a check is made as to whether the retuned standard colour values [X', Y', Z'] lie in the respective printing colour space and
- if the retuned standard colour values [X', Y', Z'] do not lie in the printing colour space, a representation of the non-printable colour values is undertaken onto the surface of the printing colour space, obtaining the colour tone and also with uniform reduction of brightness [L*] and chrominance [a*,b*].

**8.** The method according to Claim 3, <u>characterised in that</u>

- after the correction of the effective area coverage values [c,m,y,k], a check is made as to whether the sum of the area coverage values is greater than a threshold value which is able to be preset and
- if this is the case, the area coverage values [k] are increased in small stages and a re-calculation of the area coverage values is carried out according to the Neugebauer equations for four-colour printing.

**9.** The method according to any of Claims 1 to 6, <u>characterised in that</u> for the correction of the approximately calculated print table [C,M,Y,K=f(L*, a*, b*)]

- a test table containing a number of colours [j] is generated and the colour values [L*j(v), a*j(v), b*j(v)] of the colour fields are determiined as nominal values,
- the nominal colour values [L*j(v), a*j(v), b*j(v)] of the test table are reconverted by means of the approximately calculated print table [C,M,Y,K=f(L*, a*, b*)] into the colour separation values [C,M,Y,K],
- the test table is printed by means of the colour separation values [C,M,Y,K] on the subsequent printed material or is provided as a proof,
- the actual colour values [L*j(m), a*j(m), b*j(m)] of the corresponding colours of the test table present as test print or proof are measured colorimetrically,
- the nominal colour values [L*j(v), a*j(v), b*j(v)] and the associated actual colour values [L*j(m), a*j(m), b*j(m)] are compared with each other, and
- from the colour difference values obtained by comparison of the nominal colour values and the actual colour values, corresponding correction colour values [dL∗, da*, db∗] are calculated for the colour values [L*, a*, b*] of the print table [C,M,Y,K=f(L*, a*, b*)] according to an equalization method.

**10.** The method according to Claim 9, <u>characterised in that</u> the correction colour values [dL*, da*, db∗] are calculated from the nominal colour values [L*j(v), a*j(v), b*j(v)] and the colorimetrically measured actual colour values [L*j(m), a*j(m), b*j(m)] of the test table with colorimetric spacing evaluation by a spacing function [f(j)] according to the following equation:

$$dL^* = \Sigma j\ [f(j)\ x\ (L^*j(m) - L^*j(v))]\ /\ \Sigma j\ [f(j)]$$

$$da^* = \Sigma j\ [f(j)\ x\ (a^*j(m) - a^*j(v))]\ /\ \Sigma j\ [f(j)]$$

$$db^* = \Sigma j\ [f(j)\ x\ (b^*j(m) - b^*j(v))]\ /\ \Sigma j\ [f(j)]$$

- and the corrected colour values [L*_{KOR}, a*_{KOR}, b*_{KOR}] are determined from the colour values [L*, a*, b*] and the correction colour values [dL*, da*, db*] by addition according to the following equation:

$$L^*_{KOR} = L^* + dL^*$$

$$a^*_{KOR} = a^* + da^*$$

$$b^*_{KOR} = b^* + db^*$$

in which:

dL*, da*, db* =                    correction colour values
L*j(v),a*j(v),b*j(v) =             measurement values test table
L*j(m),a*j(m),b*j(m) =            measurement values test print
f(j) =                             spacing function

11. The method according to Claim 9 or 10, <u>characterised in that</u> as spacing function, a 4th degree function of the form:

$$f(j) = 1/[(L^* - L^*j(m))^2 + (a^*-a^*j(m))^2 + (b^* - b^*j(m))^2]^2$$

is used.

12. The method according to any of Claims 1 to 11, <u>characterised in that</u> the test table is a colour table with colorimetrically defined colour fields.

13. The method according to any of Claims 1 to 12, <u>characterised in that</u> the colours of the colour fields of the test table are selected in the colour space in a visually equally spaced manner.

14. The method according to any of Claims 1 to 13, <u>characterised in that</u> the actual colour values [L*j(m), a*j(m), b*j (m)] of the colours of the test table are measured by means of a spectral photometer, a colorimeter or a correspondingly calibrated input apparatus (1, 2, 3), in particular a colour scanner.

15. The method according to any of Claims 1 to 14, <u>characterised in that</u> the correction colour values [dL*, da*, db*] are stored and during the current colour conversion are added to the stored colour values [L*j(v), a*j(v), b*j(v)] with the correct sign, in order to obtain the corrected colour values [L*$_{KOR}$, a*$_{KOR}$, b*$_{KOR}$].

16. The method according to any of Claims 1 to 15, <u>characterised in that</u> before the current colour conversion the correction colour values [dL*, da*, db*] are added to the stored colour values [L*j(v), a*j(v), b*j(v)] with the correct sign, in order to obtain the corrected colour values [L*$_{KOR}$, a*$_{KOR}$, b*$_{KOR}$].

17. The method according to any of Claims 1 to 16, <u>characterised in that</u> with the aid of the corrected colour values [L*$_{KOR}$, a*$_{KOR}$, b*$_{KOR}$] a new print table [C,M,Y,K=f(L*, a*, b*)] is calculated.

18. The method according to any of Claims 1 to 17, <u>characterised in that</u> the colour values of the print table [C,M,Y,K = f(L*, a*, b*)] are stored as a three-dimensional look-up-table (LUT).

19. An arrangement for the conversion of colour values of a first colour space into the colour separation values of a print colour space in apparatus and systems for colour image processing, <u>characterised by</u>

- a data source (14) for the storage of the nominal colour values [L*j(v), a*j(v), b*j(v)] of the colours of a test table,
- a table memory (19) to store an approximately calculated print table [C,M,Y,K = f(L*, a*, b*)],
- a measurement apparatus (16) for the colorimetric determining of the actual colour values [L*j(m), a*j(m), b*j (m)] of the colours of a test print (17) or proof of the test table,
- a comparative stage (15), the inputs of which are connected with the outputs of the data source (14) and of the measurement apparatus (16), to compare the nominal colour values [L*j(v), a*j(v), b*j(v)] of the colours of the test table with the measured actual colour values [L*j(m), a*j(m), b*j(m)] of the colours of the test print (17) or proof of the test table and by
- a correction value stage (18), the inputs of which are connected to the outputs of the data source (14) and of the comparative stage (15) and the output of which is connected to the input of the table memory (19), to obtain colour correction values [dL*, da*, db*] from the colour difference values obtained by comparison of the nominal colour values [L*j(v), a*j(v), b*j(v)] with the actual colour values [L*j(m), a*j(m), b*j(m)] and for the production of corrected colour values [L*$_{KOR}$, a*$_{KOR}$, b*$_{KOR}$] for the colour conversion.

20. The arrangement according to Claim 19, <u>characterised in that</u> the correction value stage (18) has a second table memory to store the corrected colour values [L*$_{KOR}$, a*$_{KOR}$, b*$_{KOR}$].

21. The arrangement according to Claim 19 or 20, <u>characterised in that</u> the correction value stage (18) has an interpolator.

22. The arrangement according to any of Claims 19 to 21, <u>characterised in that</u> as colour measurement apparatus (16), a colorimeter, a spectral photometer or a correspondingly calibrated input apparatus, preferably a colour scanner, is used.

**Revendications**

1. Procédé de conversion de teintes d'un premier espace de couleurs en des teintes d'un second espace de couleurs (espace de couleurs d'impression) propre à une opération d'impression, pour des appareils et des systèmes de traitement d'images en couleur, selon lequel :

   - à partir de teintes du premier espace de couleurs, on calcule les teintes cohérentes fonctionnellement du second espace de couleurs, de manière analytique, par approximation comme tableau de conversion,
   - on convertit les teintes du premier espace de couleurs à l'aide du tableau de conversion approché en des teintes correspondantes du second espace de couleurs et,
   - on corrige les teintes du tableau de conversion approché par un calibrage de teintes en ce que,
   - on forme des différences de couleurs par une comparaison entre des teintes de consigne et des teintes réelles, et à partir des différences de couleurs selon un procédé de compensation, on forme des valeurs de correction pour le tableau de conversion approché,

   caractérisé en ce que
   pour l'adaptation exacte des composantes de couleur selon le procédé d'impression respectif,

   - on calcule de façon analytique, par approximation, à partir des teintes [L*, a*, b*] du premier espace de couleurs, les composantes [C, M, Y, K] de l'espace de couleurs d'impression servant à l'impression respective, en tenant compte des couleurs d'impression de l'espace des couleurs d'impression du procédé d'impression utilisé, des propriétés colorimétriques du support d'impression utilisé pour cette impression et des paramètres du procédé d'impression sous la forme d'un tableau d'impression [C, M, Y, K = f(L*, a*, b*)],
   - à partir des teintes caractéristiques [L*(v), a*(v), b*(v)] d'un tableau de test [14], on détermine les composantes de couleurs [C, M, Y, K] correspondantes, à l'aide du tableau d'impression, approché, [C, M, Y, K = f (L*, a*, b*)],
   - avec les composantes de couleurs obtenues [C, M, Y, K], en tenant compte des paramètres du procédé d'impression pour la future impression, on imprime un tableau de couleurs [17] ou une épreuve et on mesure par colorimétrie,
   - pour déterminer les différences de couleurs [L*(m) - L*(v), a*(m) - a*(v), b*(m) - b*(v)], on utilise les teintes [L*(m), a*(m), b*(m)] obtenues par la mesure du tableau de couleurs [17], comme teintes réelles et les teintes caractéristiques [L*(v), a*(v), b*(v)] du tableau de test [14] comme teintes de consigne et,
   - on corrige les teintes [L*(v), a*(v), b*(v)] du tableau de test [14] par des valeurs de correction [dL*, da*, db*] pour effectuer une correction préalable des teintes [L*, a*, b*], et les teintes précorrigées [L*, a*, b*], sont les teintes d'entrée du tableau d'impression, approché, [C, M, Y, K = f (L*, a*, b*)).

2. Procédé selon la revendication 1,
   caractérisé en ce que
   comme premier espace de couleurs, on utilise un espace de couleurs normalisé par exemple l'espace de couleurs CIELAB, avec un espace de couleurs, sensible, étagé de manière régulière.

3. Procédé selon la revendication 1 ou 2,
   caractérisé en ce que
   pour un calcul analytique par approximation du tableau d'impression [C, M, Y, K = f (L*, a*, b*)),

   - on transforme les teintes [L*, a*, b*) du premier espace de couleurs en tenant compte de la nature de la lumière, en des teintes normalisées [X, Y, Z] de l'espace couleurs CIE 1931 XYZ,
   - on accorde les teintes normalisées [X, Y, Z] par une transformation d'accord de couleurs sur le blanc de référence du support d'impression respectif,
   - à partir des teintes normalisées, accordées [X', Y', Z'], à l'aide de l'équation de Neugebauer, pour l'impression en trichromie, on calcule les valeurs effectives de recouvrement de surface [c, m, y] qui sont une mesure de la taille des points de la trame des trois teintes d'impression sur le support d'impression,

- à partir des valeurs effectives de recouvrement de surface [c, m, y] des trois couleurs d'impression chromatiques, on calcule les valeurs de recouvrement de surface [k] qui se correspondent fonctionnellement pour la couleur d'impression « noir » (composante de noir),
- à partir des valeurs effectives de recouvrement de surface [c, m, y] des trois couleurs d'impression, chromatiques, à l'aide des équations de Neugebauer, pour l'impression en quadrichromie, et en prédéterminant les valeurs de recouvrement de surface [k] de la couleur d'impression « corrigée », on calcule les valeurs effectives de recouvrement de surface [c, m, y] et,
- on convertit les valeurs effectives de recouvrement de surface corrigées [c, m, y] ainsi que la valeur [k] en tenant compte de la croissante du point à l'impression, en des composantes de couleurs [C, M, Y, K] du tableau d'impression.

4. Procédé selon la revendication 3,
caractérisé en ce qu'
on effectue la transformation d'accord de couleurs des teintes normalisées [X, Y, Z] selon la transformation « von Kries ».

5. Procédé selon la revendication 3,
caractérisé en ce qu'
on calcule les valeurs de recouvrement de surface [k] pour la couleur d'impression « noir » à partir de la valeur minimale respective des valeurs effectives de recouvrement de surface [c", m", y"] des trois couleurs d'impression chromatiques.

6. Procédé selon la revendication 3,
caractérisé en ce qu'

- on effectue le calcul et la correction des valeurs effectives de recouvrement de surface à l'aide des équations de Neugebauer pour l'impression en trichromie et l'impression en quadrichromie, par itération selon un procédé d'approximation en négligeant la teinte engendrée par la surimpression des points de trame,
- on corrige l'erreur de la solution par approximation par une valeur de correction obtenue par un développement en série et,
- on arrête l'itération dès que la valeur de correction atteint une valeur limite inférieure prédéterminée.

7. Procédé selon la revendication 3,
caractérisé en ce qu'

- après transformation d'accord de couleurs, on vérifie si les teintes normalisées [X' , Y', Z'], accordées, se situent dans l'espace couleur d'impression respectif et,
- au cas où les teintes normalisées, accordées [X' , Y', Z'], ne se situent pas dans l'espace des couleurs d'impression, on effectue une copie des teintes que l'on ne peut imprimer à la surface de l'espace des couleurs d'impression en conservant la teinte et en réduisant régulièrement la luminosité [L*] et la saturation [a*b*].

8. Procédé selon la revendication 3,
caractérisé en ce qu'

- après la correction des valeurs effectives de recouvrement de surface [c, m, y, k], on vérifie si la somme des valeurs de recouvrement de surface est supérieure à une valeur limite prédéterminée et,
- si cela est vrai, on augmente par petits échelons la valeur de recouvrement de surface [k] et on fait un nouveau calcul des valeurs de recouvrement de surface selon les équations Neugebauer, pour l'impression en quadrichromie.

9. Procédé selon l'une des revendications 1 à 6,
caractérisé en ce que
pour la correction du tableau d'impression calculé par approximation [C, M, Y, K = f(L*, a*, b*)],

- on génère un tableau de test contenant un certain nombre de couleurs [j], et on détermine les teintes [$L^*_j$ (v), $a^*_j$ (v), $b^*_j$ (v)] comme valeurs de consigne,
- on transforme les teintes de consigne [$L^*_j$(v), $a^*_j$(v), $b^*_j$(v)], du tableau de test à l'aide du tableau d'impression calculé par approximation [C, M, Y, K = f (L*, a*, b*)], en composantes de couleurs [C, M, Y, K],
- on imprime le tableau de test à l'aide des composantes de couleurs [C, M, Y, K] sur le futur support d'impression, ou on établit une épreuve,
- on effectue une mesure colorimétrique des teintes réelles [L*$_j$ (m), a*$_j$ (m), b*$_j$ (m)], des couleurs correspondantes du tableau de test existant comme impression ou épreuve,
- on compare entre elles les teintes de consigne [L*$_j$(v), a*$_j$ (v), b*$_j$(v)] et les teintes réelles correspondantes [L*$_j$ (m) , a*$_j$ (m), b*$_j$ (m) et,

à partir des différences de couleurs obtenues par la comparaison des teintes de consigne et des teintes réelles, on calcule des teintes de correction [dL*, da*, db*] correspondantes pour teintes [L*, a*, b*], du tableau d'impression [C, M, Y, K = f(L*, a*, b*)], selon un procédé de compensation.

**10.** Procédé selon la revendication 9,
caractérisé en ce qu'
on calcule les teintes de correction [dL*, da*, db*] à partir des teintes de consigne [L*$_j$ (v), a*$_j$ (v), b*$_j$(v)] et à partir des teintes réelles mesurées par colorimétrie [L*$_j$ (m), a*$_j$ (m), b*$_j$ (m)] avec exploitation colorimétrique de la distance par une fonction de distance [f(j)] selon les équations suivantes :

$$dL^* = \Sigma_j[f(j) \times (L^*_j(m) - L^*_j(v))]/ \Sigma_j[f(j)]$$

$$da^* = \Sigma_j[f(j) \times (a^*_j(m) - a^*_j(v))]/ \Sigma_j[f(j)]$$

$$db^* = \Sigma_j[f(j) \times (b^*_j(m) - b^*_j(v))]/ \Sigma_j[f(j)]$$

- et on détermine les teintes corrigées [L*$_{KOr}$, a*$_{KOR}$, b*$_{KOR}$ ] à partir des teintes [L*, a*, b*] et des teintes de correction [dL*, da*, db*] par addition selon les équations suivantes :

$$L^*_{KPR} = L^* + dL^*$$

$$a^*_{KOR} = a^* + da^*$$

$$b^*_{KOR} = b^* + db^*$$

dans lesquelles :

dL*, da*, db* = teintes de correction
L*$_j$ (v) , a*$_j$ (v) , b*$_j$ (v) = tableau de test des valeurs de mesure
L*$_j$ (m) , a*$_j$ (m) , b*$_j$ (m) = impression des valeurs de mesure
f(j) = fonction de distance.

**11.** Procédé selon la revendication 9 ou 10,
caractérisé en ce que
comme fonction de distance, on utilise une fonction du quatrième ordre d'expression :

$$f (j) = 1/[(L^* - L^*_j (m))^2 + (a^*-a^*_j(m))^2 +(b^*-b^*_j (m))^2]^2$$

**12.** Procédé selon l'une quelconque des revendications 1 à 11,
caractérisé en ce que
le tableau de test est un tableau de couleurs avec des champs de couleurs définis par colorimétrie.

**13.** Procédé selon l'une des revendications 1 à 12,

caractérisé en ce que
les couleurs des champs de couleurs du tableau de test dans l'espace des couleurs sont choisies de façon à être visuellement équidistantes.

**14.** Procédé selon l'une des revendications 1 à 13,
caractérisé en ce que
les teintes réelles [$L^*_j$ (m), $a^*_j$(m), $b^*_j$ (m)] des couleurs du tableau de test sont mesurées à l'aide d'un photospectromètre, d'un colorimètre ou d'un appareil d'entrée (1, 2, 3) calibré de manière correspondante, notamment d'un détecteur de couleurs.

**15.** Procédé selon l'une des revendications 1 à 14,
caractérisé en ce que
les teintes de correction [dL\*, da\*, db\*] sont mises en mémoire et, pendant la conversion courante de couleurs, on les additionne aux teintes mises en mémoire [$L^*_j$(v), $a^*_j$(v), $b^*_j$(v)], avec un signe algébrique correct pour obtenir des teintes corrigées [$L^*_{KOR}$, $a^*_{KOR}$, $b^*_{KOR}$].

**16.** Procédé selon l'une des revendications 1 à 15,
caractérisé en ce que
les teintes de correction [dL\*, da\*, db\*] sont ajoutées en signe algébrique correct avant la conversion de couleurs courante aux teintes mises en mémoire [$L^*_j$ (v), $a^*_j$ (v), $b^*_j$(v)], pour obtenir les teintes corrigées [$L^*_{KOR}$, $a^*_{KOR}$, $b^*_{KOR}$].

**17.** Procédé selon l'une des revendications 1 à 16,
caractérisé en ce qu'
on calcule un nouveau tableau d'impression [C, M, Y, K = f (L\*, a\*, b\*)] à l'aide des teintes corrigées [$L^*_{KOR}$, $a^*_{KOR}$, $b^*_{KOR}$].

**18.** Procédé selon l'une des revendications 1 à 17,
caractérisé en ce qu'
on met en mémoire les teintes du tableau d'impression [C, M, Y, K = f (L\*, a\*, b\*)] comme tableau de mise à jour (LUT) tridimensionnel.

**19.** Installation pour convertir des teintes appartenant à un premier espace de couleurs en des composantes de couleurs d'un espace de couleurs d'impression dans des appareil et des systèmes de traitement d'images en couleurs,
caractérisée par

- une source de données (14) pour mémoriser les teintes de consigne [$L^*_j$ (v), $a^*_j$ (v), $b^*_j$(v)] des couleurs d'un tableau de test,
- une mémoire de tableau (19) pour recevoir un tableau d'impression [C, M, Y, K = f (L\*, a\*, b\*], calculé par approximation,
- un appareil de mesure (16) pour déterminer de manière colorimétrique les teintes réelles [$L^*_j$ (m), $a^*_j$ (m), $b^*_j$ (m)] des couleurs d'une impression (17) ou d'une épreuve du tableau de test,
- un comparateur d'échelon (15) dont les entrées sont reliées aux sorties de la source de données (14) et de l'appareil de mesure (16), pour comparer les teintes de consigne [$L^*_j$ (v), $a^*_j$ (v), $b^*_j$ (v)] des couleurs du tableau de test aux teintes réelles mesurées [$L^*_j$ (m), $a^*_j$ (m), $b^*_j$(m)] des couleurs de l'impression (17) ou de l'épreuve du tableau de test, et par
- un étage de correction (18) dont les entrées sont reliées aux sorties de la source de données (14) et du comparateur (15) et dont la sortie est reliée à l'entrée de la mémoire de tableau (19) pour obtenir des valeurs de correction de teintes [dL\*, da\*, db∗] à partir des teintes de consigne [$L^*_j$(v), $a^*_j$(v), $b^*_j$(v)] obtenues avec les différences de couleurs déduites des teintes réelles [$L^*_j$(m), $a^*_j$ (m), $b^*_j$ (m)], et pour générer des teintes corrigées [$L^*_{KOR}$, $a^*_{KOR}$, $b^*_{KOR}$] pour la conversion de couleurs.

**20.** Installation selon la revendication 19,
caractérisée en ce que
l'étage de correction (18) comprend une seconde mémoire de tableau pour enregistrer les teintes corrigées [$L^*_{KOR}$, $a^*_{KOR}$, $b^*_{KOR}$].

**21.** Installation selon la revendication 19 ou 20,

caractérisée en ce que
l'étage de correction (18) comporte un moyen d'interpolation.

22. Installation selon l'une des revendications 19 à 21,
caractérisée en ce que
comme appareil de mesure de couleurs (16), on utilise un colorimètre, un photospectromètre ou un appareil d'entrée calibré de manière correspondante, de préférence un détecteur de couleurs.

Fig. 1

Scanner

Kamera

Video

Bildbearbeitung

Monitor

Druck

Proof

EP 0 723 728 B1

## Berechnung einer Druck-Tabelle

Berechne aus den Stützpukten i, j, k der Drucktabelle einen zugehörigen Farbwert

Umrechnung der Farbwerte in die Normfarbwerte des CIE 1931 XYZ-Farbraumes

Farbumstimmungs-Transformation der Normfarbwerte auf das "Weiß" des Bedruckstoffes

Ja

Prüfe, ob diese Farbwerte im Druck-Farbraum liegen

Abbildung von nicht druckbaren Farbwerten auf die Oberfläche des Druck-Farbraumes

Berechnung der Flächendeckungswerte c, m, y nach den Dreifarben-Neugebauer-Gleichungen

Berechnung der Flächendeckungswerte k (Schwarzanteil) aus den Flächendeckungswerten c, m, y

Neuberechnung der Flächendeckungswerte c, m, y mit festem Schwarzanteil k nach den Vierfarben-Neugebauer-Gleichungen

Nein

Prüfe, ob die Summe der Flächendeckungswerte c, m, y, k größer als ein Grenzwert ist

Ja

Wenn möglich, Erhöhung des Schwarzanteils k in kleinen Stufen

Berechnung der Farbauszugswerte C, M, Y, K unter Berücksichtigung des Punktzuwachses

Berechnung der Stützwerte und Abspeicherung in der Drucktabelle

Wiederholung des Verfahrens für alle Stützpunkte i, j, k

Fig. 2

## Kalibrierung einer Druck-Tabelle

Generierung einer Testtafel mit definierten Farbwerten im bevorzugten Farbraum

Separation der Testtafel mit berechneter Drucktabelle und Ausgabe auf Film

Andruck oder Proof der Testtafel im gewünschten Druck-Verfahren auf dem Bedruckstoff

Farbmetrisches Ausmessen der Farbfelder der Testtafel und Speicherung der Meßwerte

Initialisierung einer Korrektur-Tabelle mit ihren Stütz-punkten

Berechnung der Farbwertdifferenzen zwischen Farbwerten der Testtafel und Meßwerten

Wiederholung des folgenden Verfahrens für alle Stütz-punkte i, j, k der Korrektur-Tabelle.

Holen eines Stützwertes aus der Korrektur-Tabelle und berechnen eines korrigierten Stützwertes

Abspeicherung des korrigierten Wertes in der Korrektur-Tabelle

Farbraum-Transformation der Farbwerte der Testtafel mit Hilfe der Korrektur-Tabelle

Berechnng der Farbwertdifferenzen zwischen neuen Farbwerten der Testtafel und Meßwerten

Ist die Änderung des mittleren Fehlers und der Standard-abweichung klein?

Nein

Zusammenrechnen von Druck-Tabelle und Korrektur-Tabelle und Abspeichern

Fig. 3

Fig. 4

L*KOR
a*KOR
b*KOR

C,M,Y,K

δL*
δa*
δb*

L*j(v)
a*j(v)
b*j(v)

L*j(m)
a*j(m)
b*j(m)

EP 0 723 728 B1

31

Fig. 5